# EUROPEAN PATENT SPECIFICATION

(11) **EP 1 134 947 B1**
(45) Date of publication and mention of the grant of the patent: **13.09.2006**
(21) Application number: 01100023.9
(22) Date of filing: 04.01.2001
(51) Int. Cl.: H04L 29/06, H04L 12/28, G06F 17/30

(54) **Apparatus and method for managing a session on plural media**
Vorrichtung und Verfahren zum Session-Management über eine Mehrzahl von Medien
Dispositif et méthode pour gérer une session sur de multiples média

(30) Priority: 15.03.2000 JP 2000073070
(43) Date of publication of application: 19.09.2001
(73) Proprietor: FUJITSU LIMITED, Kawasaki-shi, Kanagawa 211-8588 (JP)
(72) Inventor: Ninokata, Nobuyoshi, Fujitsu Nishi-Nihon, Sawara-ku, Fukuoka-shi, Fukuoka 814-8588 (JP); Suzumori, Shingo, Fujitsu Nishi-Nihon, Sawara-ku, Fukuoka-shi, Fukuoka 814-8588 (JP); Nakamura, Yayoi, Fujitsu Nishi-Nihon, Sawara-ku, Fukuoka-shi, Fukuoka 814-8588 (JP)
(74) Representative: HOFFMANN EITLE

(56) References cited:
- EP-A- 0 740 445
- EP-A- 0 845 894
- WO-A-98/23058
- US-A- 5 594 789
- MOTA T. ET AL.: "TINA as a virtual market place for telecommunication and information services: the VITAL experiment" VITAL EXPERIMENT, 12 April 1999 (1999-04-12), pages 96-106, XP002133863 Retrieved from the Internet: <URL:http://www.tinac.com/papers> [retrieved on 2000-03-23]
- MANIONE R. ET AL.: "A TINA light service architecture for the Internet-telecom scenario" TELECOMMUNICATIONS INFORMATION NETWORKING ARCHITECTURE CONFERENCE PROCEEDINGS, 1999. TINA '99 OAHU, HI, USA 12-15 APRIL 1999, PISCATAWAY, NJ, USA,IEEE, US, 12 April 1999 (1999-04-12), pages 24-32, XP010351094 ISBN: 0-7803-5785-X

## Description

### Background of the Invention

### Field of the Invention

The present invention relates to an apparatus and a method for managing an information processing session in a system for providing information through a network such as Internet.

### Description of Related Art

With significant developments of information technology, information networks have been more and more widely used. Especially, Internet functions as a leader of them, and has made remarkable progress. In addition, data communications through network have rapidly become popular not only in the U.S. and Japan, but also in many other nations in the world. As a result, it is said that the amount of data communications will exceed the amount of voice communications.

To analyze the uses of Internet, it is necessary to check the access ranking. Various search engines constantly rank high, thereby indicating a growing need for information search using Internet. In addition, when a user buys goods through an electronic transaction (e-commerce), he or she first searches for target goods in most cases, and the information search is a basic function of an information providing server.

At present, a common method of searching information through Internet is to input a search condition and display a search result through the site of a search engine provided by WWW (world wide web). In addition to the search engine, an information providing service on a home page of a common company adopts a similar search method.

In this case, a server is accessed to search for data, display a result, narrow down the result, etc. using a single medium, that is, WEB. At this time, in a continuous information process, a series of processes from the start to the end are managed as a session. In this example, a single medium 'WEB' is processed as a target in the session management, a session ID is generated during the accessing process, and the session ID is managed in the method of inheriting the session ID between WEB pages, etc.

Recently, portable information terminals represented by an i-mode terminal have become explosively popular. The feature of this type of portable information terminal resides in that multiple media such as voice, WEB, electronic mail (e-mail), etc. can be processed on the same terminal. When such a portable information terminal accesses a server, a session is managed individually for each medium.

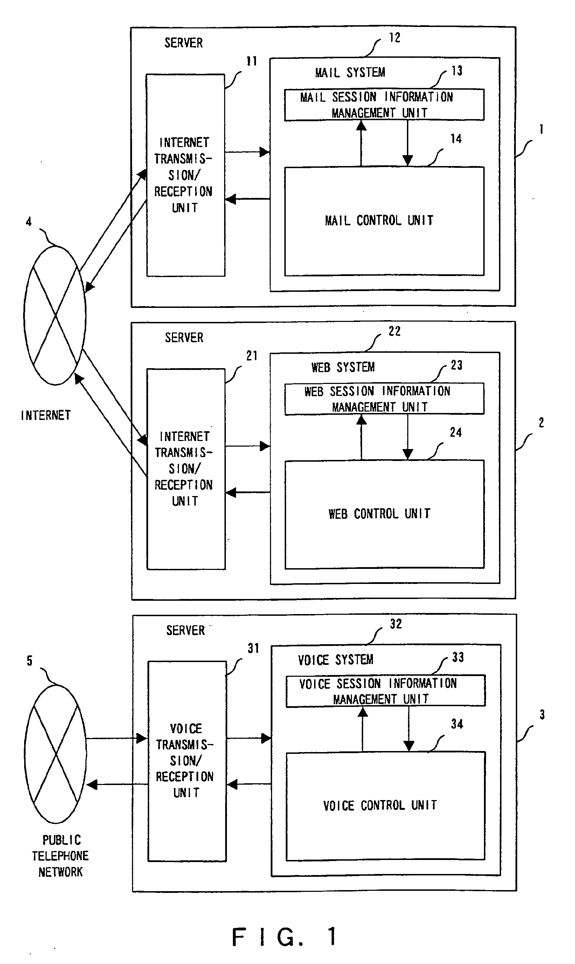

FIG. 1 shows a conventional information providing system using a plurality of media. The information providing system shown in FIG. 1 includes servers 1, 2, and 3, Internet 4, and a public telephone network 5.

The server 1 is connected to Internet 4 by an Internet transmission/reception unit 11, and includes a mail system 12. The mail system 12 includes a mail session information management unit 13 and a mail control unit 14.

The mail control unit 14 controls the communications of an individual information process at a process request of a user transmitted from Internet 4 through the Internet transmission/reception unit 11. The mail session information management unit 13 performs session management processes by starting a session for e-mail, managing the identity of the session, disconnecting the session, etc. In the session identity management, a plurality of individual information processes belonging to a session are managed, and it is determined whether or not a process requested by a user belongs to a session which has already been started.

The server 2 is connected to Internet 4 by an Internet transmission/reception unit 21, and includes a WEB system 22. The WEB system 22 includes a WEB session information management unit 23 and a WEB control unit 24. The WEB control unit 24 controls the communications of an individual information process at a process request of a user, and the WEB session information management unit 23 manages a session for the WEB.

The server 3 is connected to the public telephone network 5 by a voice transmission/reception unit 31, and includes a voice system 32. The voice system 32 includes a voice session information management unit 33 and a voice control unit 34 controls the communications of an individual information process at a process request of a user, and the voice session information management unit 33 manages a session relating to voice data.

However, the above mentioned conventional information providing system has the following problems.

When a user searches for information using a portable information terminal through which a user can process a plurality of media, the terminal searches for, narrows down, and displays data through a single medium such as WEB, etc.

However, when a plurality of media can be processed by the same terminal, all the features of the terminal are utilized, and all media are used in combination to search for, narrow down, and display data, thereby more efficiently searching information. For example, if a search condition is input by voice, a search result can be narrowed down to some extent, and the result can be displayed through the WEB, then a user can efficiently narrow down data.

However, in the conventional single-medium session management, session information is managed individually for each medium, the session information about a plurality of media cannot be collectively managed. Therefore, there have been no information searching services utilizing the feature that a plurality of media can be processed on the same terminal.

### Summary of the Invention

WO 98/23058 discloses systems which a user may access via telephone or computer (via modem or Internet). The user may access messages addressed to him or her in various media, such as e-mail, voicemail, fax, etc. The user may respond to these messages in the same media or different media, including real-time communications.

The article "A "Tina Light" Service Architecture for the Internet -Telecom scenario", by MANIONE, R. ET AL, TELECOMMUNICATIONS INFORMATION NETWORKING ARCHITECTURE CONFERENCE PROCEEDINGS, 1999, discusses a service network which may be accessed by different types of media, using the WebCentric® service.

According to a first aspect of the present invention, there is provided a session management apparatus for managing a session of an information search process through a network, the session management apparatus being configured for using a plurality of media and comprising: a plurality of communications means for transmitting and receiving data of the plurality of media respectively; a plurality of interface means respectively corresponding to the plurality of media, for respectively receiving session information from the plurality of communications means, and for generating unified session information corresponding to the received session information; and integral management means for receiving the unified session information from each of said plurality of interface means, and for performing a process relating to session management on a session of an information search process using two or more media in combination among the plurality of media according to the received unified session information.

Each communications device transmits and receives data of a corresponding medium in the plurality of media. Each interface device corresponds to one of the plurality of media, receives session information from a corresponding communications device, and generates unified session information corresponding to the received session information.

The integral management device can receive the unified session information from each interface device, and perform a process relating to session management, which may include starting a session using two or more media in the plurality of media, managing session identity, and disconnecting the session, according to the received unified session information.
According to certain embodiments of the present invention, a session management apparatus is provided as disclosed above, wherein said communications means include: mail communications means for transmitting and receiving data of an electronic mail medium; WEB communications means for transmitting and receiving data of a WEB medium; and voice communications means for transmitting and receiving data of a voice medium, wherein said plurality of interface means include: mail control means for receiving session information from said mail communications means, and generating unified session information corresponding to received session information; WEB control means for receiving session information from said WEB communications means, and generating unified session information corresponding to received session information; and voice control means for receiving session information from said voice communications means, and generating unified session information corresponding to received session information, said integral management means being arranged for performing the process relating to session management on a session of an information search process using two or more media among the electronic mail medium, the WEB medium, and the voice medium.

Each communications device transmits and receives data of a corresponding medium in the plurality of media. Each interface device corresponds to one of the plurality of media, receives session information from a corresponding communications device, and generates unified session information corresponding to the received session information. According to the unified session information, these interface devices perform processes relating to session management, which may include starting a session using two or more media in the plurality of media, managing the session identity, and disconnecting the session, according to the received unified session information.

According to a second aspect of the present invention, there is provided a computer-readable storage medium storing a program for a computer which manages a session of an information search process through a network, the computer using a plurality of media, said program, in operation, directing the computer to perform a process comprising: receiving session information of each of the plurality of media through the network; generating unified session information corresponding to the received session information; and performing sessions management on a session of an information search process using two or more media in combination among the plurality of media according to the unified session information.

According to a third aspect of the present invention, there is provided a method of managing a session of an information search process through a network using a plurality of media, comprising: receiving session information of each of the plurality of media through the network; generating unified session information corresponding to the received session information; and performing session management on a session of an information search process using two or more media in combination among the plurality of media according to the unified session information.

According to a fourth aspect of the present invention, there is provided a propagation signal propagating a program to a computer which manages a session of an information search process through a network using a plurality of media, said program used to direct the computer to perform a process comprising: receiving session information of each of the plurality of media through the network; generating unified session information corresponding to the received session information; and performing session management on a session of an information search process using two or more media in combination among the plurality of media according to the unified session information.

### Brief Description of the Drawings

For a better understanding of the present invention, and to show how the same may be carried into effect, reference will now be made by way of example only, to the drawings, in which:-
FIG. 1 shows a conventional information providing system;
FIG. 2A shows the principle of the session management apparatus according to the present invention;
FIG. 2B shows the configuration of the first session management system;
FIG. 3 shows the configuration of the second session management system;
FIG. 4 shows the configuration of the third session management system;
FIG. 5 shows the configuration of the fourth session management system;
FIG. 6 shows the configuration of the fifth session management system;
FIG. 7 is a flowchart of a multi-session ID issuing process;
FIG. 8 shows a multi-session information table;
FIG. 9 is a flowchart of a multi-session ID using process;
FIG. 10 shows a multi-session history information table;
FIG. 11 is a flowchart of a multi-session ID deleting process;
FIG. 12 is a flowchart of a multi-session ID automatic deleting process;
FIG. 13 shows the configuration of the first information search system;
FIG. 14 shows a voice interface;
FIG. 15 is a flowchart (1) of the first user information entry process;
FIG. 16 is a flowchart (2) of the first user information entry process;
FIG. 17 is a user information table;
FIG. 18 is an available media information table;
FIG. 19 is a flowchart (1) of an available medium entry confirming process;
FIG. 20 is a flowchart (2) of an available medium entry confirming process;
FIG. 21 is a flowchart (1) of the first information searching process;
FIG. 22 is a flowchart (2) of the first information searching process;
FIG. 23 shows an answer management table;
FIG. 24 shows an answer information table;
FIG. 25 is a flowchart of an answering process;
FIG. 26 shows the configuration of the second information search system;
FIG. 27 is a flowchart (1) of the second user information entry process;
FIG. 28 is a flowchart (2) of the second user information entry process;
FIG. 29 shows an e-mail user entry format;
FIG. 30 shows previous entry confirmation e-mail;
FIG. 31 shows entry confirmation e-mail;
FIG. 32 shows available e-mail address confirmation e-mail;
FIG. 33 shows an available e-mail address error message;
FIG. 34 is a flowchart (1) of the third user information entry process;
FIG. 35 is a flowchart (2) of the third user information entry process;
FIG. 36 shows an entry login form;
FIG. 37 shows a user information entry/update form;
FIG. 38 shows an entry confirmation WEB page;
FIG. 39 shows a user information update screen;
FIG. 40 is a flowchart (1) of the fourth user information entry process;
FIG. 41 is a flowchart (2) of the fourth user information entry process;
FIG. 42 is a flowchart (1) of the first communications reservation setting process;
FIG. 43 is a flowchart (2) of the first communications reservation setting process;
FIG. 44 shows an available telephone number error message;
FIG. 45 shows available telephone number error message e-mail;
FIG. 46 is a flowchart (1) of the second information searching process;
FIG. 47 is a flowchart (2) of the second information searching process;
FIG. 48 shows an e-mail search format;
FIG. 49 shows search condition extraction error notification e-mail;
FIG. 50 shows the first answer e-mail;
FIG. 51 shows the second answer e-mail;
FIG. 52 is a flowchart (1) of the third information searching process;
FIG. 53 is a flowchart (2) of the third information searching process;
FIG. 54 shows a search login form;
FIG. 55 shows a new information search form;
FIG. 56 shows an information search answer form;
FIG. 57 shows a multi-session list screen;
FIG. 58 shows a narrowing information search form;
FIG. 59 is a flowchart (1) of the fourth information searching process;
FIG. 60 is a flowchart (2) of the fourth information searching process;
FIG. 61 is a flowchart (1) of the second communications reservation setting process;
FIG. 62 is a flowchart (2) of the second communications reservation setting process;
FIG. 63 shows the configuration of an information processing device; and
FIG. 64 shows storage media.

### Description of the Embodiments

The disclosed embodiments of the present invention are described in detail below with reference to the drawings.

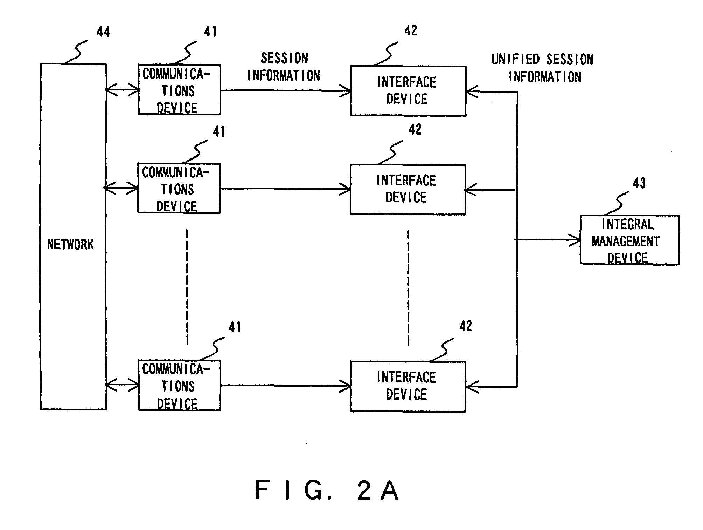

FIG. 2A shows the principle of the session management apparatus according to the present invention.

In the first disclosed embodiment, the session management apparatus comprises a plurality of communications devices 41, a plurality of interface devices 42, and an integral management device 43, and manages a session of an information process through a network using a plurality of media.

Each communications device 41 transmits and receives data of corresponding media in the plurality of media. Each interface device 42 corresponds to one of the plurality of media, receives session information from the communications device 41, and generates unified session information corresponding to the received session information.

The integral management device 43 receives unified session information from each communications device 41, and performs a process relating to session management, which includes starting a session using two or more media in the plurality of media, managing session identity, and disconnecting the session, according to the received unified session information.

The plurality of media include media such as e-mail, WEB, voice, etc. The communications device 41 uses any of the media, transmits data to a network 44, and receives data from the network 44. Then, the received data is transmitted to the interface device 42 for processing corresponding media.

If the received data is, for example, session information including identification information such as a session identifier, then the interface device 42 converts the session information received from the communications device 41 into unified session information as necessary. Then, it passes the unified session information to the integral management device 43. The unified session information is session information which can be identified by the integral management device 43, and is uniformly used in a session management apparatus.

The integral management device 43 performs a process relating to the session management of a corresponding session according to the unified session information received from the communications device 41. The session management contains the processes of starting a session, managing the session identity, and disconnecting the session, and the session identity management is performed according to the identification information contained in the unified session information.

Thus, consistent session management for two or more media is performed, and a user can perform a series of information processes using an arbitrary medium for each accessing process in a session. Therefore, an information process is realized through a network using a plurality of media in combination between a user terminal and an information providing system.

According to the second embodiment, the session management apparatus comprises a plurality of communications devices 41 and a plurality of interface devices 42, and manages the session of an information process through a network using a plurality of media.

Each communications device 41 transmits and receives data of corresponding media in the plurality of media. Each interface device 42 corresponds to one of the plurality of media, receives session information from the communications device 41, and generates unified session information corresponding to the received session information. In addition, these interface devices 42 performs processes relating to the session management, which includes starting a session using two or more media in the plurality of media, managing session identity, and disconnecting the session, according to the unified session information.

In this case, a plurality of interface devices 42 perform the processes relating to the session management by cooperating with each other in a distributed manner according to the unified session information, or the processes are performed by one interface device 42 as a representative. As a result, the similar session management can be performed without the integral management device 43.

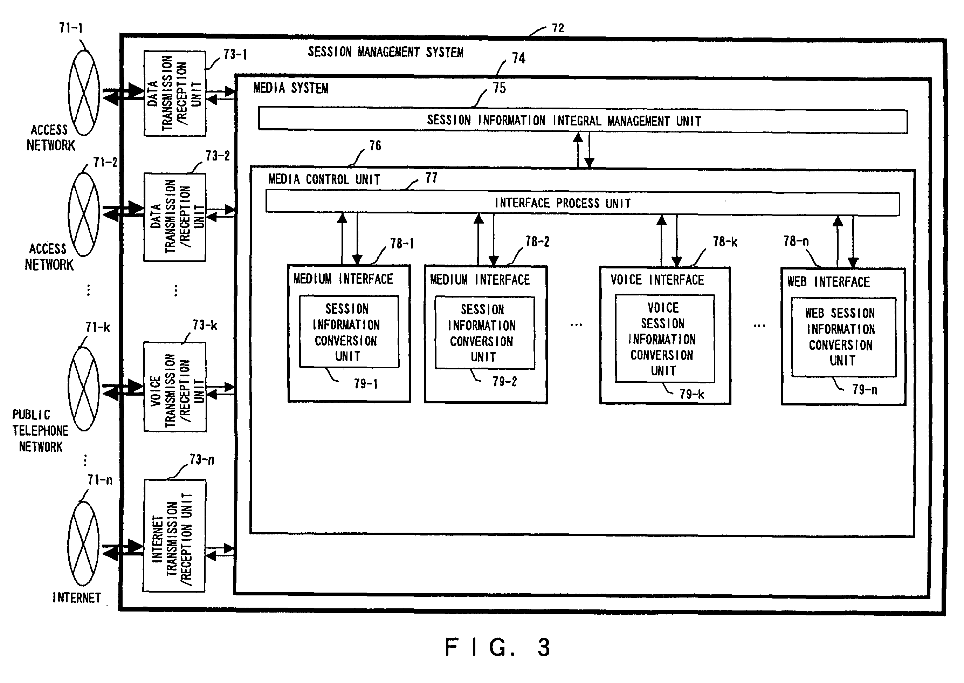

For example, the communications device 41 shown in FIG. 2A corresponds to a data transmission/reception unit 73-i (i = 1, ..., n) shown in FIG. 3 described later, and the interface device 42 shown in FIG. 2A corresponds to a medium interface 78-i shown in FIG. 3. The integral management device 43 corresponds to a session information integral management unit 75 shown in FIG. 3. For example, the network 44 corresponds to an access network 71-i shown in FIG. 3.

According to the present embodiment, a session information integral management information for managing a session using a plurality of media is provided instead of the session information management unit for each medium shown in FIG. 1. Then, in response to the input and output of a series of media, consistent session management is performed.

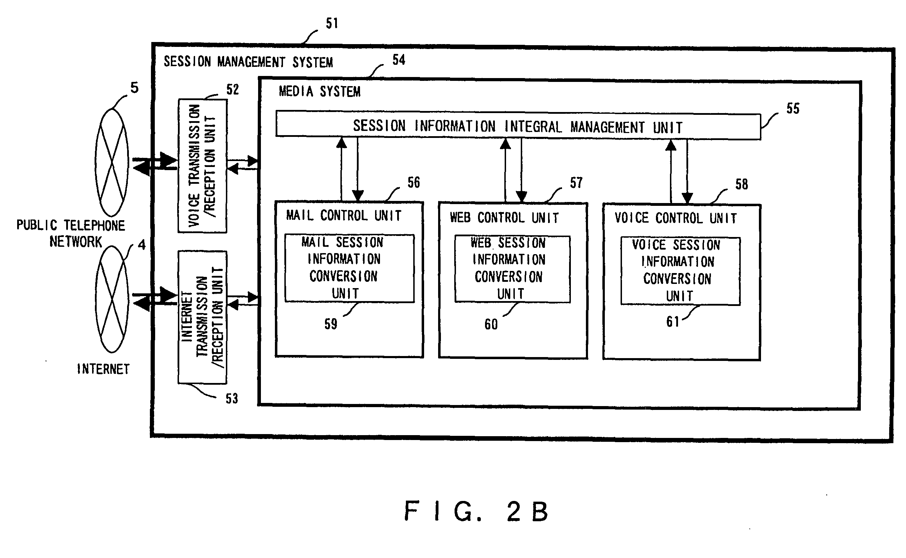

FIG. 2B shows the configuration of the session management system exclusively used for e-mail, WEB, and voice as available media. A session management system 51 shown in FIG. 2B corresponds to the information providing server configured using a computer, and is connected to the Internet 4 and the public telephone network 5.

The session management system 51 comprises a voice transmission/reception unit 52, an Internet transmission/reception unit 53, and a media system 54. The media system 54 comprises a session information integral management unit 55, a mail control unit 56, a WEB control unit 57, and a voice control unit 58.

The voice transmission/reception unit 52 is connected to the public telephone network 5, passes the voice received from the public telephone network 5 to the media system 54, and transmits the voice received from the media system 54 to the public telephone network 5. The Internet transmission/reception unit 53 is connected to Internet 4, passes the e-mail and WEB data received from Internet 4 to the media system 54, and transmits the e-mail and WEB data received from the media system 54 to Internet 4.

The mail control unit 56 and the WEB control unit 57 are connected to the Internet transmission/reception unit 53, and respectively contain a mail session information conversion unit 59 and a WEB session information conversion unit 60. The voice control unit 58 is connected to the voice transmission/reception unit 52, and contains a voice session information conversion unit 61.

The session information integral management unit 55 performs a series of processes relating to the session management including starting a session, managing the session identity, disconnecting the session, etc. according to the session information containing a session identifier (session ID).

At an arbitrary process request from a use to a system using an arbitrary medium among e-mail, WEB, and voice, the session management system 51 performs a requested process. At this time, the session information integral management unit 55 issues a session ID, and enters the session ID with the process result.

The issued session ID is passed to the control unit for the medium used for access by the user, and is converted by a session information conversion unit in the control unit into data identified as the corresponding medium. Then, the converted session ID is transmitted with the process result to the user.

For example, when a user is accessing the session management system 51 by e-mail, an issued session ID is passed to the mail control unit 56, and is converted by the mail session information conversion unit 59 into text for e-mail.

When a user is accessing the session management system 51 by WEB, the session ID is transmitted to the WEB control unit 57, and is converted into text for WEB by the WEB session information conversion unit 60.

When a user is accessing the session management system 51 with voice, the session ID is passed to the voice control unit 58, and is converted into voice for phone by the voice session information conversion unit 61.

After receiving a session ID, a user transmits the received session ID when transmitting a subsequent process request through an arbitrary medium to the session management system 51. The media system 54 passes the received process request to the control unit for the medium being used for access by the user, and the session information conversion unit in the control unit converts the session ID into data identified by the session information integral management unit 55. The converted session ID is passed to the session information integral management unit 55.

The session information integral management unit 55 searches for an entered process result using the received session ID as a key. The session management system 51 performs the requested process using the searched process result. Thus, the user can perform a series of information processes using an arbitrary medium among e-mail, WEB, and voice for each access.

The session ID and the process result entered in the session information integral management unit 55 can be arbitrarily removed at a removal request from a user or on a predetermined removal condition such as the expiration of a predetermined period, etc. Thus, the resources of the session information integral management unit 55 can be utilized efficiently.

In the session management system 51 shown in FIG. 2B, the available media are limited to e-mail, WEB, and voice. However, it is possible to furthermore expand available media to manage a session regardless of the type of medium.

FIG. 3 shows the configuration of the general-purpose session management system. A session management system 72 corresponds to, for example, an information providing server, and is connected to a plurality of access networks 71-i (i = 1, 2, ..., k, ..., n) not limited to a specific medium.

The access networks 71-i are in charge of the communications through different types of media respectively. For example, among them, access networks 71-k and 71-n correspond to a public telephone network and Internet respectively. The media on these access networks can be facsimile, video data, personal computer communications, short mail, a control signal, etc. in addition to the above mentioned e-mail, WEB, and voice.

Among the media, video data contain a picture stream provided in real time and recorded image data, and a control signal contains a signal generated by a user using a special input device, and a signal perceived by a user using a special output device.

The session management system 72 is provided with a plurality of data transmission/reception units 73-i and a media system 74. The media system 74 comprises a session information integral management unit 75 and a media control unit 76 not limited to a specific medium. Among them, data transmission/reception units 73-k and 73-n respectively correspond to a voice transmission/reception unit and an Internet transmission/reception unit, for example.

The data transmission/reception unit 73-i is connected to the access network 71-i, passes data received from the access network 71-i to the media system 74, and transmits data received from the media system 74 to the access network 71-i.

In addition, the media control unit 76 is provided with an interface process unit 77 and a plurality of medium interfaces 78-i. The medium interfaces 78-i configure a group of medium-dependent interfaces not limited to a specific medium. The interface process unit 77 performs an interfacing process between the session information integral management unit 75 and each medium interface 78-i. The medium interface 78-i is connected to the data transmission/reception unit 73-i, and contains a session information conversion unit 79-i.

Among them, medium interfaces 78-k and 78n respectively correspond to a voice interface and a WEB interface, for example. Session information conversion units 79-k and 78-n respectively correspond to a voice session information conversion unit and a WEB session information conversion unit, for example.

The session information conversion unit 79-i performs a data conversion between the medium-dependent session information processed by a corresponding medium interface 78-i and the session information processed by the session information integral management unit 75.

Like the session information integral management unit 55 shown in FIG. 2B, the session information integral management unit 75 performs a series of processes relating to the session management including starting a session, managing the session identity, disconnecting the session, etc. according to the session information containing a session ID.

At an arbitrary process request from a user to the system 72 using an arbitrary medium, the system 72 performs a requested process. At this time, the session information integral management unit 75 issues a session ID, and enters the session ID with the process result.

The issued session ID is passed to the medium interface 78-i through the interface process unit 77 for the medium used for access by the user, and is converted by a session information conversion unit 79-i in the medium interface 78-i into data identified as the corresponding medium. Then, the converted session ID is transmitted with the process result to the user.

For example, when a user is accessing the system 72 by voice, a session ID is passed to the voice interface 78-k, and is converted by the voice session information conversion unit 79-k into voice for telephone.

When a user is accessing the system 72 by WEB, the session ID is transmitted to the WEB interface 78-n, and is converted into text for WEB by a WEB session information conversion unit 79-n.

After receiving a session ID, a user transmits the received session ID when transmitting a subsequent process request through an arbitrary medium to the system 72.

The media system 74 passes the received process request to the medium interface 78-i for the medium being used for access by the user, and the session information conversion unit 79-i in the medium interface 78-i converts the session ID into data identified by the session information integral management unit 75. The converted session ID is passed to the session information integral management unit 75 through the interface process unit 77.

The session information integral management unit 75 searches for an entered process result using the received session ID as a key. The system 72 performs the requested process using the searched process result. Thus, the user can perform a series of information processes using an arbitrary medium for each access.

The session ID and the process result entered in the session information integral management unit 75 can be arbitrarily removed as in the system shown in FIG. 2B. Thus, the resources of the session information integral management unit 75 can be utilized efficiently.

In addition, the session information integral management unit 75 can manage a plurality of sessions for one user. The session information integral management unit 75 assigns a plurality of session IDs for each user ID at a plurality of session establishment requests for each user ID when a session ID is entered.

To be more practical, when a timing of issuing a session ID is concerned, the session information integral management unit 75 allows a new session ID to be issued when a new process request is received from the user or when a discontinuous process request is received from the user (when a session ID is not assigned to a process request).

Then, the system 72 selects a specified ID from among the session IDs when each user accesses the system, and performs a process corresponding to the specified session. Thus, a plurality of sessions can be managed for each user.

In addition, the session information integral management unit 75 can manage the version number of an individual information process contained in one session. When the session information integral management unit 75 manages the result of an individual information process, it assigns a session ID and additional identification information (version number information or history identification information) to each process result. As the additional identification information, for example, an additional number (a version number or a history number) is used. Then, the user selects a necessary number from a plurality of addional numbers when continuous processes are performed, and accesses the session management system 72.

To be more practical, when the session information integral management unit 75 issues a session ID and enters it with a process result, or when an entered session ID and a process result are searched for at a continuous process request from a user to additionally enter the result of the continuous process for the session ID, the session information integral management unit 75 stores the version number (history number) with the session ID. Then, when the process result is used, it allows the user to select a session ID and a version number.

Thus, the user can gain access again from an arbitrary point in a session, thereby reconsidering the conditions of the continuous process.

In the session management system 72 shown in FIG. 3, the session information integral management unit 75 manages a session of a plurality of media independent of the media control unit 76, but it is also possible that each of the medium interfaces 78-i in the media control unit 76 manages the session in cooperation with others in a distributed manner.

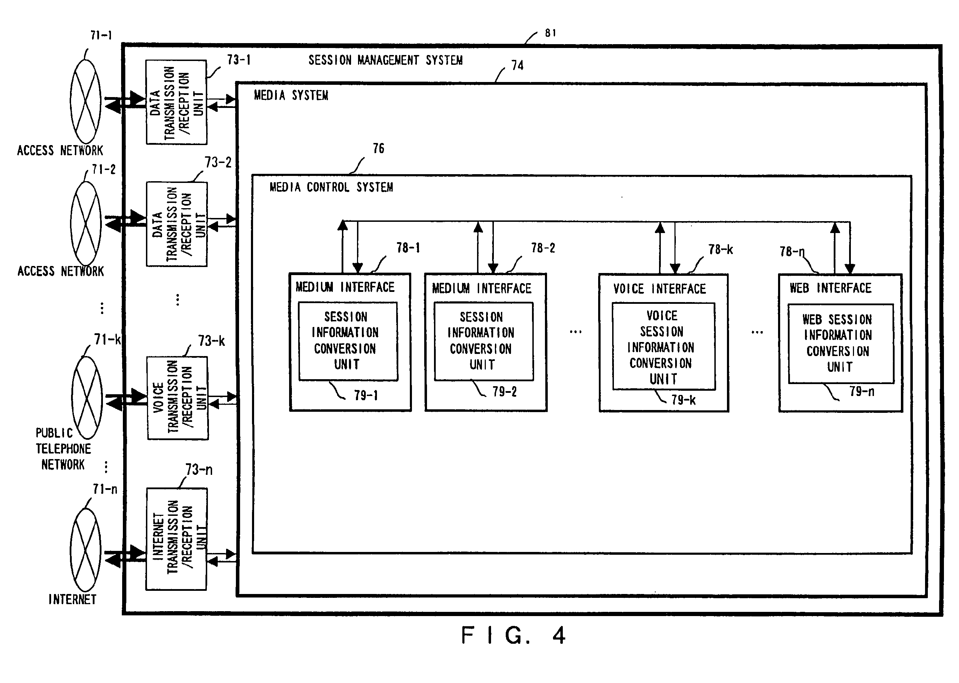

FIG. 4 shows the configuration of the session management system. A session management system 81 shown in FIG. 4 does not contain the session information integral management unit 75 or the interface process unit 77, but each of the medium interfaces 78-i in the media control unit 76 has the function of issuing a session ID, communicates with another medium interface, and manages the issued session ID and the process result in cooperation with other medium interfaces.

When a user transmits a session ID and accesses one of the medium interfaces 78-i, the session information conversion unit 79-i in the medium interface 78-i converts the session ID into a common data format, and transfers the result to another medium interface.

Each medium interface which has received the common session ID converts the session ID using the session information conversion unit 79-i into a corresponding medium, and searches for a process result using the conversion result as a key. When a corresponding process result is received, it is returned to the source medium interface 78-i. Thus, the same session is recognized between medium interfaces, and the user can perform arbitrary and continuous information processes.

It is also possible that, instead of the medium interface 78-i in the media control unit 76 performing the session management in a distributed manner, a representative medium interface performs the session management.

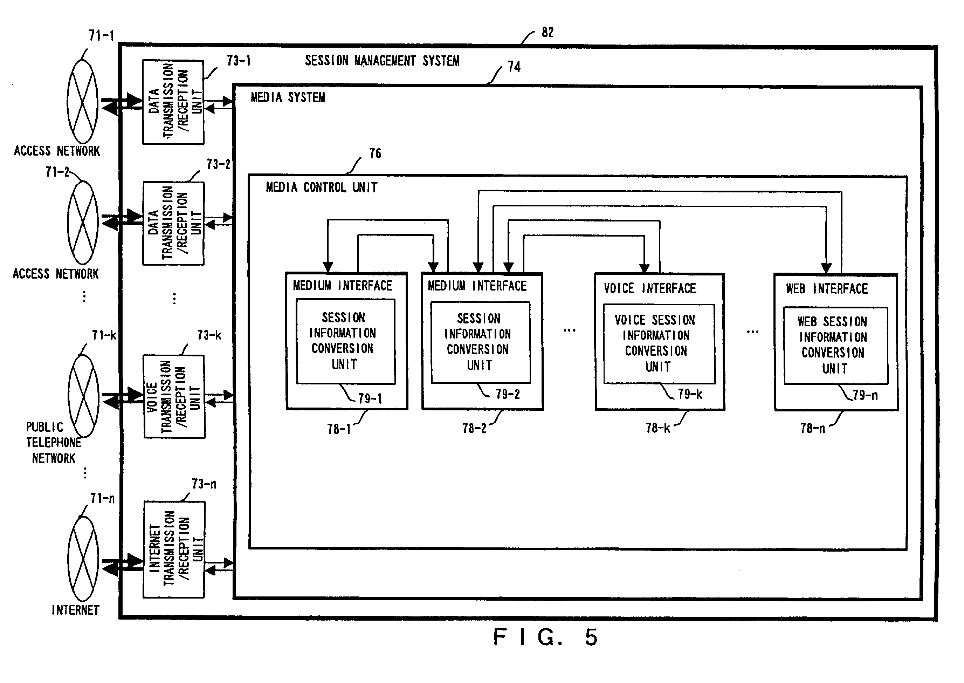

FIG. 5 shows the configuration of such a session management system. A session management system 82 shown in FIG. 5 does not contain the session information integral management unit 75 or the interface process unit 77, but a specific medium interface 78-2 in the media control unit 76 has the function of issuing a session ID, communicates with another medium interface, and manages the issued session ID and the process result.

When a user transmits a session ID and accesses one of the medium interfaces 78-i (i ≠ 2), the session information conversion unit 79-i in the medium interface 78-i converts the session ID into a common data format, and transfers the result to the medium interface 78-2.

The medium interface 78-2 which has received the common session ID converts the session ID using the session information conversion unit 79-2 into a corresponding medium, and searches for a process result using the conversion result as a key. When a corresponding process result is received, it is returned to the source medium interface 78-i. Thus, the same session is recognized between medium interfaces, and the user can perform arbitrary and continuous information processes.

In the session management system shown in FIGS. 2B through 5, a consistent session managing process is performed for the input and output of a series of media. Thus, as long as a user issues a process request, the session information can be permanently managed. In addition, the processes can be interactively switched between media, thereby performing asynchronous and random-order processes an arbitrary number of times. Therefore, unlike a sequential system, an information process with high flexibility can be realized.

A user can also perform an efficient narrowing search while freely selecting and combining a plurality of media when information is to be searched for. As a result, the time taken before obtaining desired information can be largely shortened. Furthermore, a narrowing search can be performed with high operability by selecting a voice input instead of a key input for WEB, or by selecting a search result notification using WEB instead of a notification by voice. Therefore, the convenience can be improved when information is searched for through a network while using a plurality of media in combination.

In addition, an information provider can provide a user with various services using a plurality of media not only for information search, and the user can use the services using an arbitrary medium. For example, in an online shopping process, etc. in electronic commerce, a medium having the highest ability of viewing can be used when goods are to be viewed and selected. When a credit settlement is made, a medium having the highest security can be used.

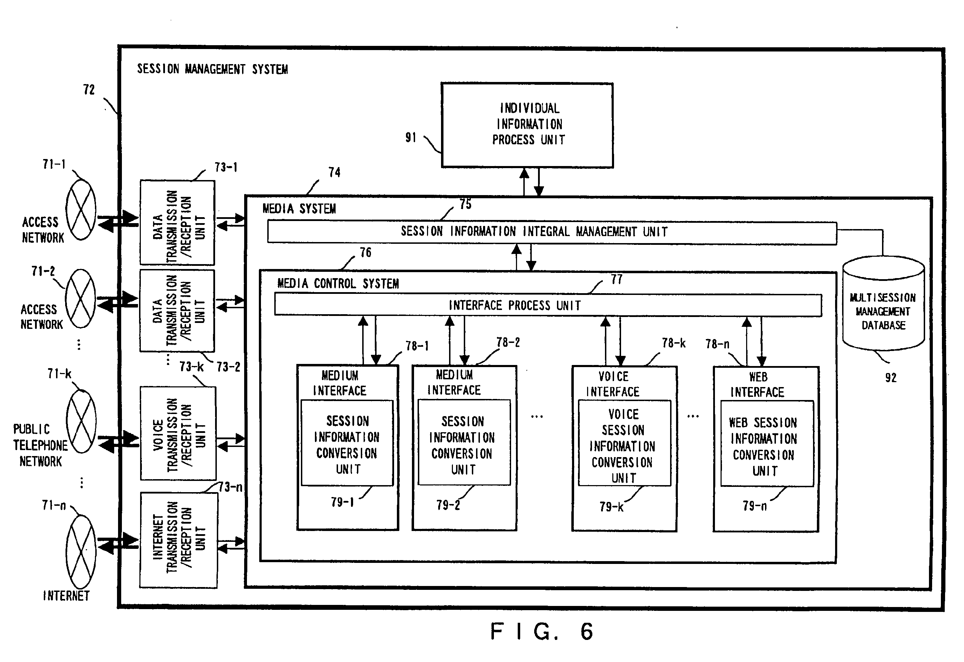

Next, by referring to FIGS. 6 through 12, the operations of the session management system based on the configuration shown in FIGS. 2B and 3 are described below furthermore in detail.

FIG. 6 shows the detailed configuration of the session management system shown in FIG. 3. The session management system 72 shown in FIG. 6 further comprises an individual information process unit 91 and a multi-session management database (multi-session management DB) 92.

The voice transmission/reception unit 73-k is an interface between the public telephone network 71-k and the media system 74, and controls the transmission/reception of voice data. The Internet transmission/reception unit 73-n is an interface between Internet 71-n and the media system 74, and controls the transmission/reception of Internet data.

Another data transmission/reception unit 73-i is an interface between another access network 71-i and the media system 74, and controls the transmission/reception of various media data. These various media contain future media in addition to the existing media. The media system 74 can be connected to an arbitrary access network through an arbitrary data transmission/reception unit.

The media system 74 comprises the session information integral management unit 75 for integrally managing a plurality of media sessions as a multi-session, the media control unit 76 for allowing an arbitrary medium to use the system 72, and the multi-session management database 92 for managing session information.

The media control unit 76 contains the interface process unit 77, and controls the medium interface 78-i to be arbitrarily added and deleted. For example, the system 72 can be used with a voice medium by adding the voice interface 78-k to the media control unit 76, and can be used with a WEB medium by adding the WEB interface 78-n.

The individual information process unit 91 performs an individual information process requested by a user at a request from the media system 74, and returns a process result to the media system 74. As an individual information process, for example, a process such as information search, a view of goods in an electronic transaction and settlement of payment, a network auction, information exchange between client operator and a company server in the CRM (customer relationship management), etc.

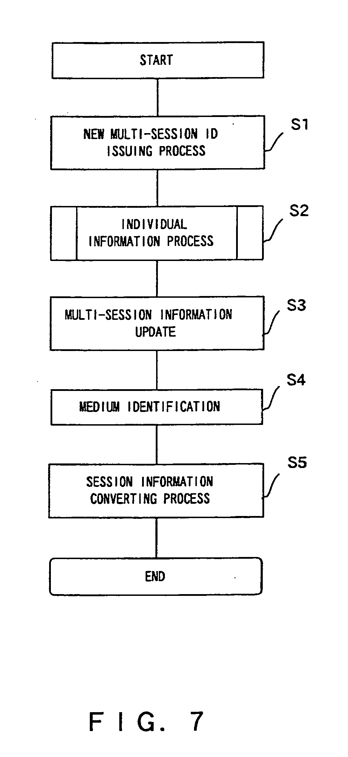

FIG. 7 is a flowchart of a multi-session ID issuing process by the session management system 72 shown in FIG. 6. A user accesses the session management system 72 with an arbitrary medium (hereinafter referred to as an access medium). When an individual information process is first performed, the session information integral management unit 75 newly issues a multi-session ID to use a plurality of media (step S1). Then, necessary information is entered with the issued multi-session ID in the multi-session information table stored in the multi-session management database 92.

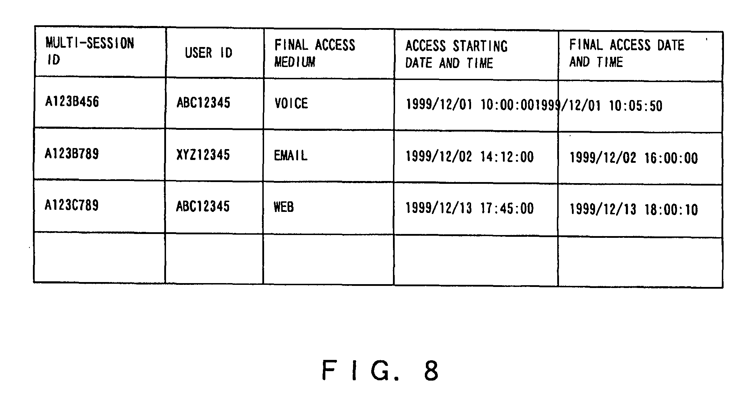

FIG. 8 shows an example of a multi-session information table. The multi-session information table shown in FIG. 8 contains a multi-session ID, a user ID, a final access medium, an access starting date and time, and a final access date and time entered as multi-session information. When a new multi-session ID is issued, for example, an access starting date and time is entered as the final access date and time.

Then, the individual information process unit 91 inherits the multi-session ID from the media system 74, and performs a requested process (step S2). When the process performed by the individual information process unit 91 is completed, the session information integral management unit 75 updates the final access medium and the final access date and time on the multi-session information table (step S3).

Then, the media control unit 76 identifies an access medium (step S4), and transmits the multi-session ID to the corresponding medium interface 78-i. The medium interface 78-i converts the multi-session ID using the session information conversion unit 79-i (step S5), and the converted multi-session ID is notified to the user with the result (answer) of the individual information process, thereby terminating the process.

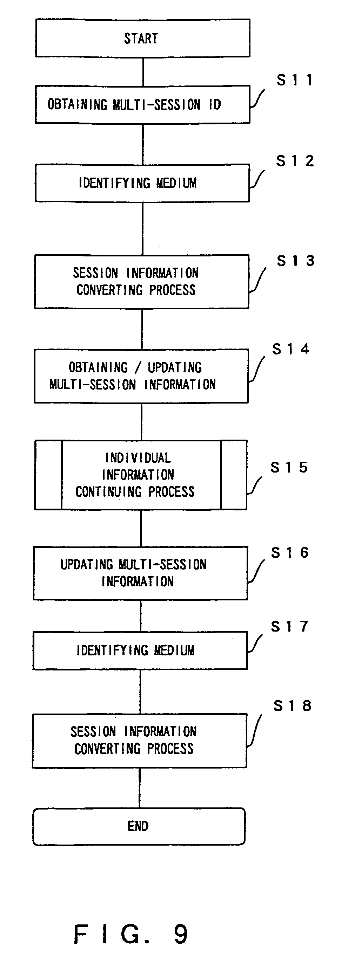

FIG. 9 is a flowchart of the multi-session ID use process by the system 72 shown in FIG. 6. When a user specifies the multi-session ID through an access medium and accesses the system 72 for the second or subsequent individual information process, the media control unit 76 obtains the multi-session ID for the access medium (step S11).

Then, the media control unit 76 identifies the access medium (step S12), and the corresponding medium interface 78-i converts the multi-session ID through the session information conversion unit 79-i (step S13). Then, the converted multi-session ID is transmitted to the session information integral management unit 75.

The session information integral management unit 75 searches the multi-session information table using the received multi-session ID as a key, obtains corresponding multi-session information, and updates the final access medium (step S14). Then, the individual information process unit 91 inherits the multi-session ID from the media system 74, and performs the requested process (step S15).

The subsequent processes in steps S16 through S18 are the same as the processes in steps S3 through S5 shown in FIG. 7.

Thus, when a user specifies the use of an existing multi-session ID, the session information integral management unit 75 obtains multi-session information from the multi-session information table of the multi-session management database 92 using the multi-session ID as a key. Then, according to the multi-session information, the individual information process unit 91 obtains the history of the past individual information processes of the user, and performs again a continuous process based on the history.

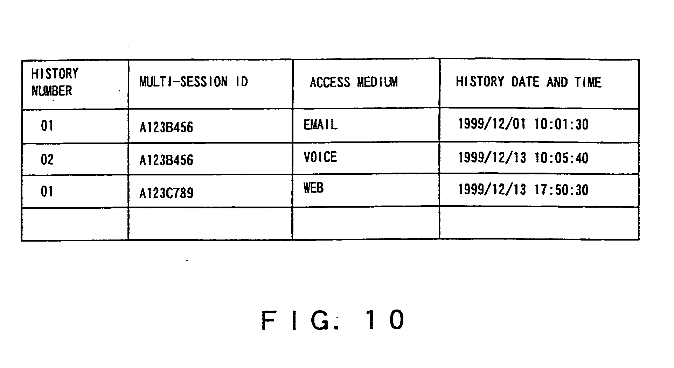

In this embodiment, for example, the multi-session management database 92 contains a multi-session history information table as shown in FIG. 10. Then, a multi-session ID, an access medium, and a history date and time for each individual information process are entered as multi-session information together with a unique history number (additional number) for each multi-session ID. Thus, when a user accesses the system 72 by specifying the multi-session ID and the history number using an access medium, he or she can inherit the continuous process from the past process result.

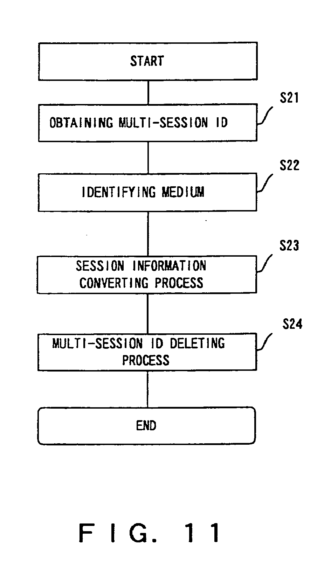

FIG. 11 is a flowchart of the multi-session ID deleting process by the system 72 shown in FIG. 6. When the user performs the second or subsequent individual information process (including a continuous process) and the process is completed, the media control unit 76 obtains the multi-session ID for the access medium (step S21).

The processes in steps S22 and S23 are the same as the processes in steps S12 and S13 shown in FIG. 9.

The session information integral management unit 75 searches the multi-session information table and the multi-session history information table using the multi-session ID received from the media control unit 76 as a key (step S24). Then, the corresponding multi-session information is deleted from these tables, thereby terminating the process.

After the user performs an individual information process (including a continuous process), and does not perform the individual information process within a predetermined period, the system 72 automatically deletes the multi-session information.

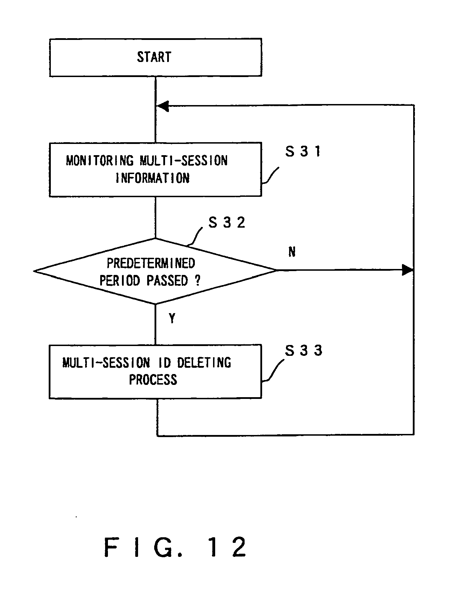

FIG. 12 is a flowchart of the multi-session ID automatically deleting process. The session information integral management unit 75 periodically monitors the final access date and time of the multi-session information table (step S31), and checks whether or not the difference between the final access date and time and the current date and time exceeds a predetermined period (step S32).

If the difference does not exceed the predetermined period, the processes in and after step S31 are repeated. If the difference between the final access date and time and the current date and time exceeds the predetermined period, the multi-session information is deleted from the multi-session information table and the multi-session history information table using the corresponding multi-session ID as a key (step S33).

In the session management system 51 shown in FIG. 2B, the individual information process unit 91 and the multi-session management database 92 as shown in FIG. 6 can be provided. In this case, the existing 3 most popular media, that is, e-mail, WEB, and voice, are specified in performing the similar session management to that of the session management system 72 shown in FIG. 6.

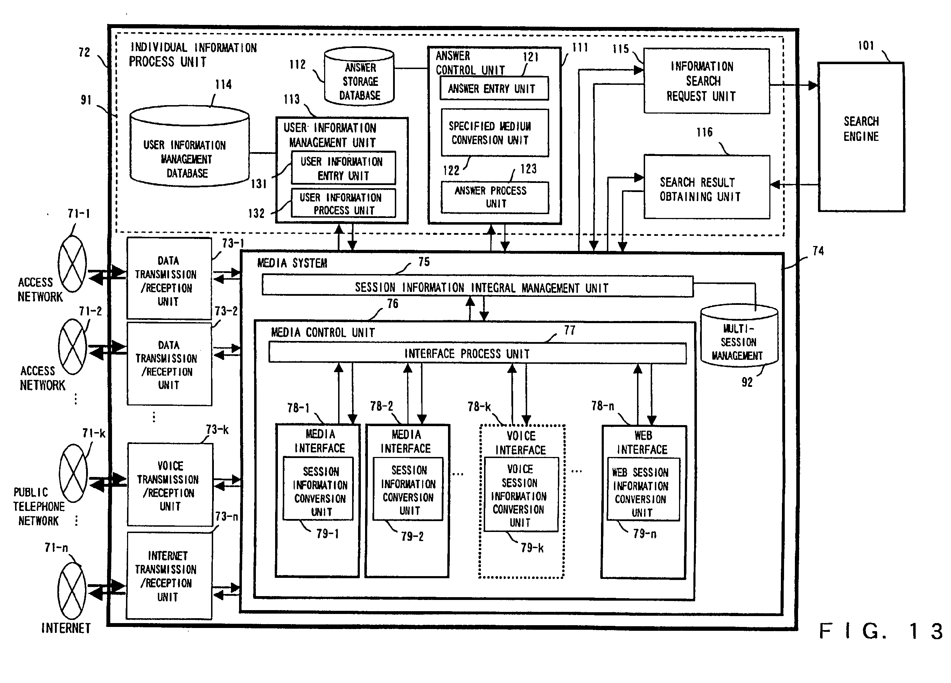

Next, the information search system based on the session management system shown in FIG. 6 is described below by referring to FIGS. 13 through 25.

FIG. 13 shows the configuration of the information search system. The information search system shown in FIG. 13 comprises the session management system 72 and a search engine 101. The search engine 101 can be provided inside the system 72 instead of outside the system 72.

The individual information process unit 91 of the system 72 comprises an answer control unit 111, an answer storage database (answer storage DB) 112, a user information management unit 113, a user information management database (user information management DB) 114, an information search request unit 115, and a search result obtaining unit 116.

The answer control unit 111 comprises an answer entry unit 121, a specified medium conversion unit 122, and an answer process unit 123, and controls an answer of an information search result. The answer entry unit 121 issues a history number, and enters it in the answer storage database 112 together with necessary information such as a search result, etc. It also writes information to, deletes information from, and updates information in the answer storage database 112.

The specified medium conversion unit 122 converts the search result into a user requested answer medium format.

The answer process unit 123 performs a new search/continuation determining process and an analyzing process by referring to the answer storage database 112. This analyzing process contains a process of obtaining a search history based on, for example, the user ID and the multi-session ID.

The user information management unit 113 contains a user information entry unit 131 and a user information process unit 132, and manages the information about a user who uses the information search system. The user information entry unit 131 issues a user ID, and enters it together with other information in the user information management database 114. It also writes information to, deletes information from, and updates information in the user information management database 114.

The user information process unit 132 analyzes the user information received from the media system 74 by referring to the user information management database 114. This analyzing process includes determining new entry/amendment entry, determining entered/not-entered, determining a desired medium to be entered, etc.

The information search request unit 115 requests the search engine 101 to search for information, and the search result obtaining unit 116 obtains a search result from the search engine 101.

With the configuration, when information is searched for and selectively searched for, the session information integral management unit 75 manages a session so that a consistent searching process using a plurality of media can be performed. Thus, the process of the session management system 72 is specialized into information search, and the user can search for information continuously with an arbitrary medium.

The user makes user information entry using an arbitrary medium before information search. At this time, the user information management unit 113 enters user information in the user information management database 114. The user information includes the type of medium used when a user searches for information.

The media control unit 76 conducts a connection test on media which can be confirmed among the available media desired by the user, and a medium which has been confirmed for connection is entered. At this time, each of the medium interfaces 78-i in the media control unit 76 transmits an entry confirmation message to the user. If the message can be transmitted, an entry completion confirmation message is generated and transmitted to indicate that the interface of the corresponding medium on the user side is available.

In the above mentioned user information entry process, it is guaranteed that each medium is available when information is searched for through a plurality of media, thereby entering correct user information.

When user information is entered, and when a user desires to use voice as a searching medium, the media control unit 76 uses the voice interface 78-k and the voice transmission/reception unit 73-k to obtain the voiceprint information about the user. At this time, the voice interface 78-k transmits a guide for entering voiceprint to the user, and the user information management unit 113 enters the voiceprint information from the user in the user information management database 114.

When the user request the system 72 to search for information using voice, the voice interface 78-k performs user authentication based on voiceprint authentication. Thus, the security of access using a voice medium is guaranteed. The user authentication can be performed for the whole session of a plurality of media by allowing access using various media after a voiceprint is authenticated using voice.

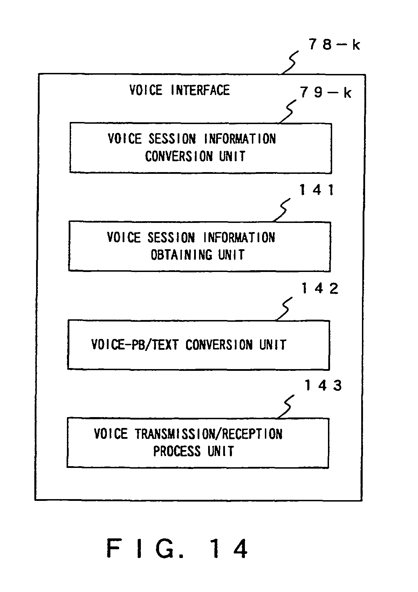

In addition to the voice session information conversion unit 79-k, the voice interface 78-k comprises, for example, a voice session information obtaining unit 141, a voice-PB/text conversion unit 142, and a voice transmission/reception process unit 143 as shown in FIG. 14.

The voice transmission/reception process unit 143 controls the transmission and reception of voice data and a PB (push button) signal. The voice-PB/text conversion unit 142 converts a received voice data and PB signal into text data so that the voice session information obtaining unit 141 can recognize them. The voice session information obtaining unit 141 obtains the session information such as a multi-session ID, etc. contained in the text data, and transmits the obtained information to the voice session information conversion unit 79-k.

By providing the above mentioned voice interface 78-k, a user can use the information search system using voice data and a PB signal.

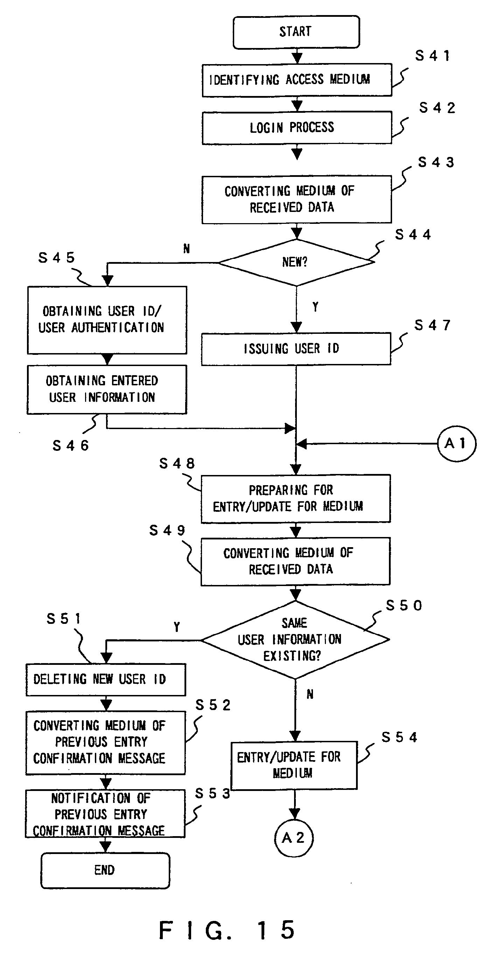

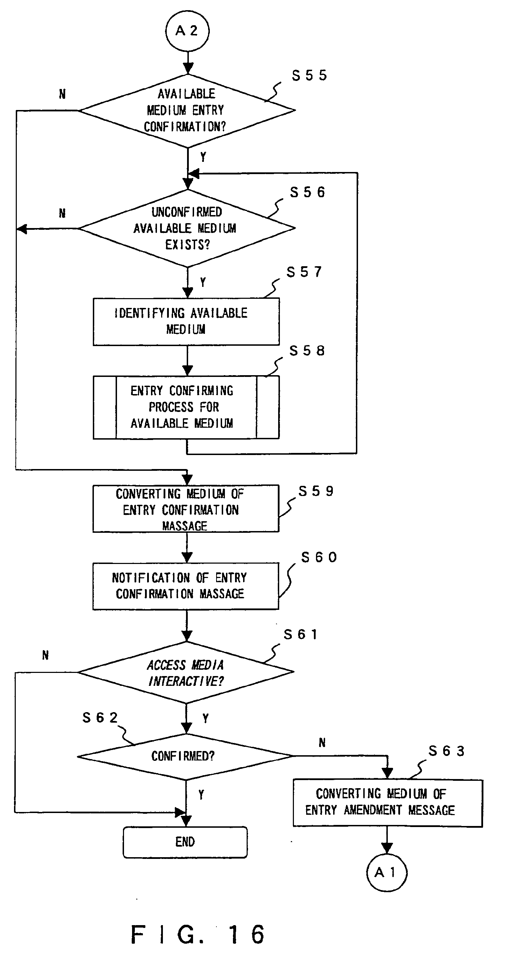

FIGS. 15 and 16 are flowcharts of the user information entry process by the information search system shown in FIG. 13. When a user who desires a user entry accesses the system 72 using an access medium, the media control unit 76 identifies the access medium (step S41 shown in FIG. 15), and performs an access medium login process (step S42).

For example, when an access medium is e-mail, the user describes the information such as a user name, a desired medium to be entered (e-mail, WEB, voice, etc.), address information of the desired medium (e-mail address, telephone number, etc.), the type of entry (new entry, amendment entry, etc.), etc. in the e-mail in a predetermined format, and transmits the information to the system 72. Then, the media control unit 76 extracts from the e-mail the necessary information for login.

When the WEB is used, the media control unit 76 displays the login form on a user terminal, and performs a login process. When voice is used, the media control unit 76 transmits a voice guidance for login.

Then, the media control unit 76 performs a medium conversion for received data so that the login information received through the access medium can be uniformly used in the session management system 72 (step S43). After the medium conversion, the received data is transmitted to the user information management unit 113 as unified received login data.

For example, when the data format uniformly used in the system 72 is text, the text data transmitted by e-mail or WEB can be used as is. Therefore, the media control unit 76 transmits the received data as is to the user information management unit 113 as unified received login data.

The voice data transmitted by telephone is converted into text data by the voice-PB/text conversion unit 142 shown in FIG. 14. The image data transmitted by facsimile is converted into text data by a character recognition device such as an OCR (optical character reader), etc.

Then, the user information process unit 132 of the user information management unit 113 determines whether the user entry is a new entry or an amendment entry by referring to the unified received login data (step S44). If it is an amendment entry, an authentication ID such as a user ID, etc. is obtained to perform the user authentication (an error check) (step S45), and the entered user information is obtained (step S46). If it is a new entry, the user information entry unit 131 issues a new user ID (step S47).

Then, the media control unit 76 prepares for the entry/update with the access medium (step S48). For example, when an access medium is e-mail, the received e-mail is analyzed, and necessary information for a user entry is extracted. When it is WEB, an entry/update form is displayed. When it is voice, a voice guidance is output for entry/update.

Next, the media control unit 76 performs a medium conversion as in step S43 so that the entry/update information received through the access medium can be uniformly used in the session management system 72 (step S49). The received data after the medium conversion is transmitted to the user information management unit 113 as unified received entry/update data.

Then, the user information process unit 132 refers to the unified received entry/update data, and determines whether or not the same user information is entered with different user IDs (step S50). If such user information has already been entered, then the newly issued user ID is deleted, and the message that the previous entry has been confirmed is transmitted to the media control unit 76 (step S51). The media control unit 76 converts the message into data recognized by the access medium (step S52), and the user is notified of the message through the access medium (step S53), thereby terminating the process.

If the same user information has not been entered, the user information entry unit 131 enters and reflects the unified received entry/update data as user information in the user information table and the available media information table stored in the user information management database 114 (step S54).

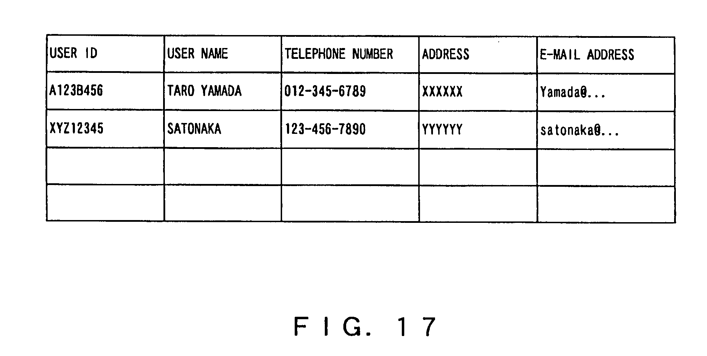

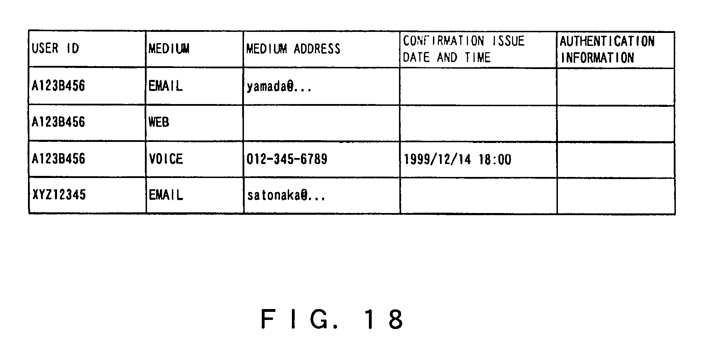

FIG. 17 shows an example of a user information table. FIG. 18 shows an example of an available media information table. In the user information table shown in FIG. 17, a user ID, a user name, a telephone number, an address, and an e-mail address are entered. In the available media information table shown in FIG. 18, a user ID, an available medium, the address information about the available medium, a confirmation issue date and time, and authentication information are entered.

Then, the media control unit 76 refers to the unified received entry/update data to determine whether or not there is a medium requiring an available medium entry confirmation (step S55 shown in FIG. 16). If there are such media, an entry confirmation process is performed for each of the available media until there is no media requiring an entry confirmation.

The media control unit 76 first determines whether or not there is an unconfirmed available medium (step S56). If yes, the available medium is identified (step S57). Then, an entry confirmation process is performed on the available medium (step S58), and the processes in and after step S56 are repeated. The entry confirmation process for an available medium is described later.

If there is no medium requiring an available medium entry confirmation in step S55, or if there is no unconfirmed available medium in step S56, then the media control unit 76 converts an entry confirmation message for the access medium (step S59), and the user is informed of the message by the access medium (step S60).

Then, the media control unit 76 determines whether or not the access medium is a bi-directional (interactive) medium (step S61). If not, the process terminates. A bi-directional medium refers to a medium capable of transmitting and receiving information without re-access between a user and a system.

If an access medium is a bi-directional medium, an entry completion/entry amendment confirmation message is given to the user by the access medium, and an answer from the user is determined (step S62). When the user accepts the termination of the entry, the process terminates.

When an amendment request is received from the user, an entry amendment message is converted for the access medium, the message is given to the user by the access medium (step S63), and the processes in and after step S48 shown in FIG. 15 are performed.

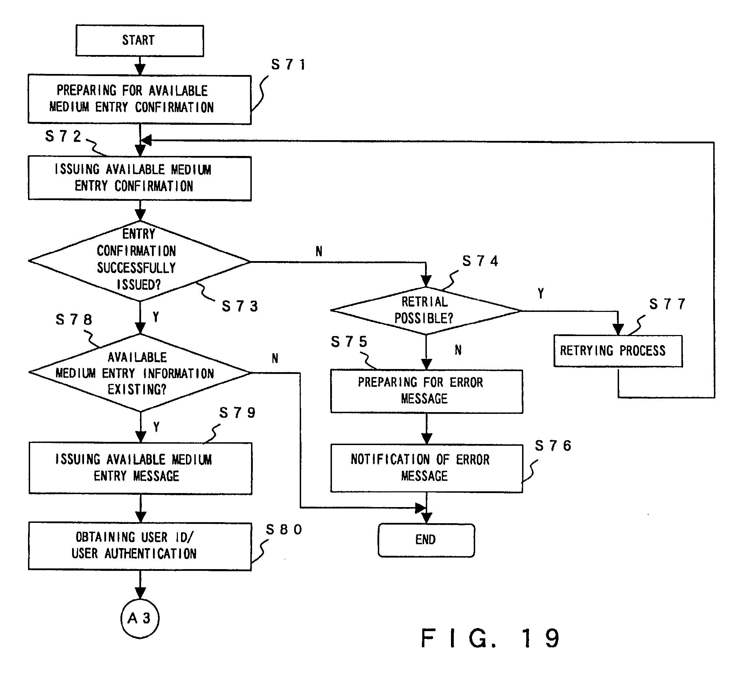

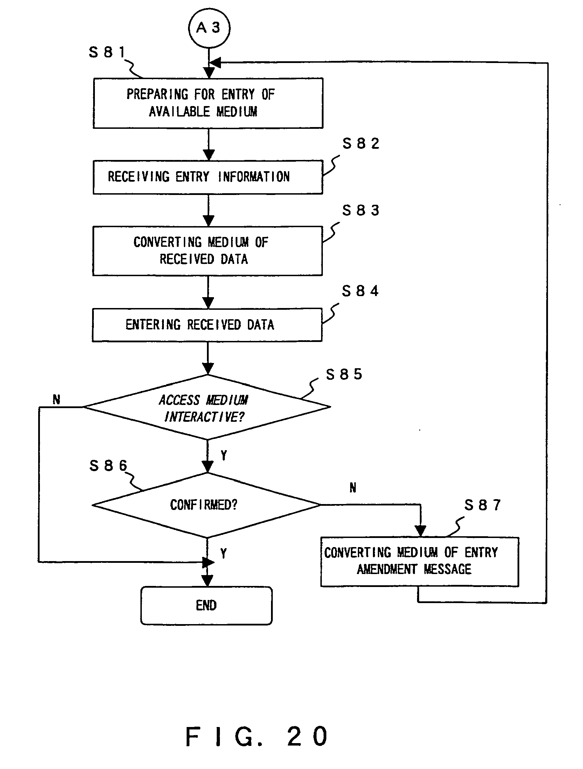

FIGS. 19 and 20 are flowcharts of the available medium entry confirmation process in step S58 shown in FIG. 16. First, the user information process unit 132 of the user information management unit 113 obtains the confirmation issue date and time, address, etc. of the corresponding available medium from the available media information table in the user information management database 114, prepares for the entry confirmation for the available medium, and awaits the obtained confirmation issue date and time (step S71 shown in FIG. 19).

Then, at the confirmation issue date and time, the media control unit 76 issues an entry confirmation for the available medium to the address of the available medium (step S72), and determines whether or not the issue of the entry confirmation is normal (step S73). If it is abnormal, then it is determined whether or not the available medium allows a retrying process (step S74).

If it does not allow a retrying process, then an entered available medium is selected from the available media information table, and an entry confirmation error message for the available medium is converted for the selected medium (step S75). Then, the error message is given to the user by the selected medium (step S76), thereby terminating the process. If the medium allows a retrying process, then the retrying process is performed (step S77), and the processes in and after step S72 are repeated.

If the entry confirmation is normally issued in step S73, the media control unit 76 determines whether or not the entry information (for example, authentication information such as a voiceprint, etc.) for the available medium is required (step S78). If the entry information is not required, the process terminates. If the entry information is required, then an available medium entry message is issued (step S79), and the authentication data is received from the user.

Then, the user information process unit 132 obtains a user ID from the received data to authenticate the user (step S80), and prepares for the entry of the entry information for the available medium (step S81 shown in FIG. 20).

Next, the media control unit 76 receives the entry information from the user (step S82), and converts the medium of the received data (step S83). After converting the medium, the received data is transmitted to the user information management unit 113 as unified received entry information data for available medium.

Then, the user information entry unit 131 enters the unified received entry information data for available medium in the available media information table of the user information management database 114 (step S84).

The media control unit 76 performs the processes in steps S85 through S87 on the entered available medium (current access medium). These processes are the same as those in step S61 through S63 shown in FIG. 16.

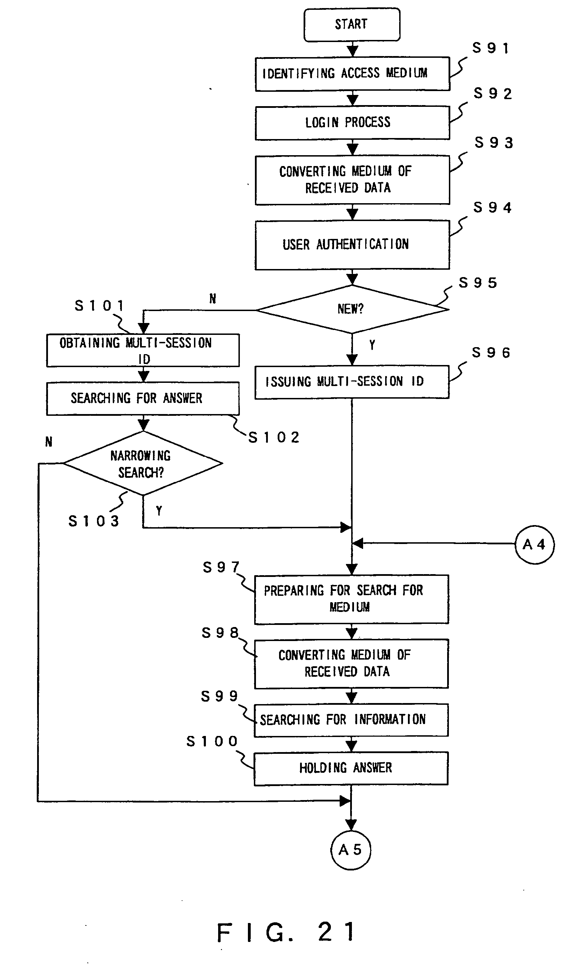

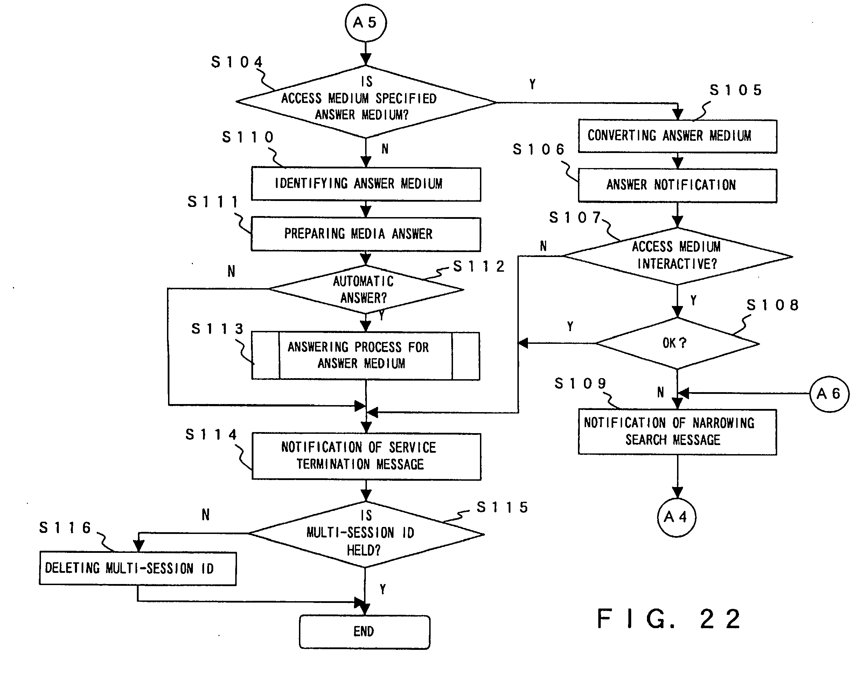

FIGS. 21 and 22 are flowcharts of the information searching process by the information search system shown in FIG. 13.

When an entered user who desires to search for information accesses the session management system 72 by an access medium, the media control unit 76 identifies the access medium (step S91 shown in FIG. 21), and performs a login process for the access medium (step S92).

For example, the access medium is e-mail, then a user describes by e-mail the information such as a user ID, authentication characters such as a password, etc., a type designation of new search/continuation (obtaining an answer or narrowing search), a multi-session ID, a history number, a search condition, a result obtaining method (answer medium), etc. in a predetermined format, and transmits the information to the system 72. If the answer medium is voice, the result obtaining method contains the information about whether the result is given from the system 72 to the user by telephone, or from the user to the system 72 by telephone, etc.

Then, the media control unit 76 performs medium conversion on the obtained login information, and generates unified received login data (step S93). Then the user information process unit 132 performs user authentication based on the user ID, etc. of the unified received login data (step S94).

Then, the session information integral management unit 75 refers to the unified received login data to determine whether the information search is new search or continuation (step S95). If it is new search, then the session information integral management unit 75 issues a multi-session ID, and enters necessary information in the multi-session information table of the multi-session management database 92 (step S96).

Then, the media control unit 76 prepares for search for the access medium (step S97). For example, when an access medium is e-mail, received e-mail is analyzed to extract necessary information for information search. When it is WEB, an information search form is displayed. When it is voice, a voice guidance is output, thereby information search is indicated.

Next, the media control unit 76 performs medium conversion for the received search condition, generates unified received information search data uniformly available in the session management system 72 (step S98), and the session information integral management unit 75 transmits the unified received information search data to the information search request unit 115. At this time, a multi-session ID is inherited by the information search request unit 115.

Then, the information search request unit 115 transmits the search condition of the unified received information search data to the search engine 101, and requests it to search for information (step S99). Then, the search result obtaining unit 116 receives a search result from the search engine 101, and transmits it to the session information integral management unit 75.

The session information integral management unit 75 updates the final access medium and the final access date and time in the multi-session information table, and passes the received search result to the answer control unit 111 together with the multi-session ID.

The answer entry unit 121 of the answer control unit 111 enters and stores the received search result as an answer to the user in the answer management table and the answer information table of the answer storage database 112 (step S100).

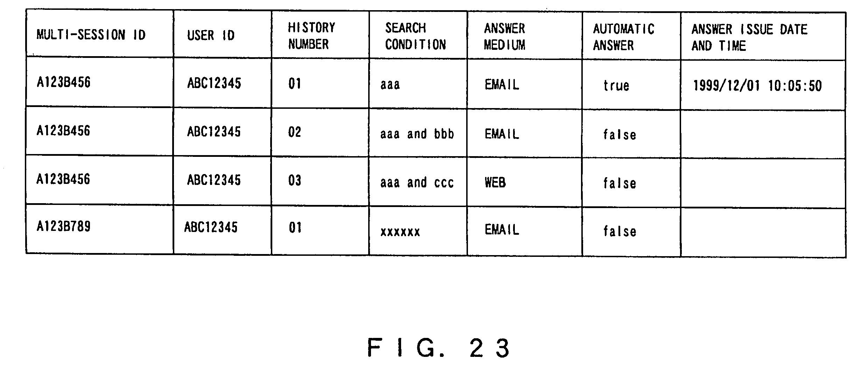

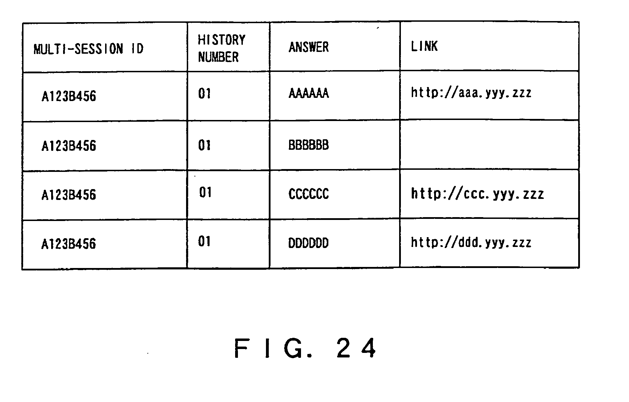

FIG. 23 shows an example of an answer management table. FIG. 24 shows an example of an answer information table. The answer management table shown in FIG. 23 contains a multi-session ID, a user ID, a history number, a search condition, an answer medium, the possibility of an automatic answer (true/false), and an answer issue date and answer. The answer information table shown in FIG. 24 contains a multi-session ID, a history number, an answer (search result), and answer link information.

The answer medium shown in FIG. 23 indicates an available medium specified by a user, and the possibility of an automatic answer indicates whether or not an answer can be automatically given from the system 72 to the user. When an answer can be automatically given, an answer issue date and time are entered in advance.

In step 595, if the type of searching process is continuation (obtaining an answer or narrowing search), then the session information integral management unit 75 obtains the multi-session ID from the unified received login data, and obtains the multi-session information about the user from the multi-session information table using the multi-session ID as a key (step S101). Then, the final access medium of the multi-session information table is updated, and the multi-session ID is passed to the answer control unit 111.

Then, the answer process unit 123 of the answer control unit 111 searches the answer storage database 112 using the multi-session ID as a key, and obtains a corresponding answer from the answer information table (step S102). Then, it is determined whether the type of continuing process is obtaining an answer or narrowing search (step S103).

When narrowing search is determined, the processes in and after step S97 are performed. In this case, the session information integral management unit 75 passes the answer and the unified received information search data obtained from the answer information table to the information search request unit 115 together with the multi-session ID, and requests narrowing search based on the search result indicated by the answer. Then, a narrowing search result is received from the search result obtaining unit 116, and transmitted to the answer control unit 111.

At this time, the session information integral management unit 75 enters a history number, a multi-session ID, an access medium, and a history date and time in the multi-session history information table shown in FIG. 10 for each narrowing search process performed continuously. In addition, the answer entry unit 121 of the answer control unit 111 enters the history number together with the multi-session ID in the answer management table shown in FIG. 23 and the answer information table shown in FIG. 24 for each answer. Then, the media control unit 76 gives the history number with the answer and the multi-session ID to the user.

Thus, when the user specifies the multi-session ID and the history number to request the system 72 to search for information, a narrowing search process can be performed based on the past search results. Therefore, information can be searched for again by reconsidering the conditions from any time point in the multi-session.

In addition, when a search result is entered in the multi-session history information table, the answer management table, and the answer information table, only the latest history number and the latest search result could be stored for each multi-session ID, so that the narrowing process can be performed based on the latest search result when the searching process is performed again. Thus, the latest version of the search result can be necessarily provided, and the user can always use the latest search result.

In step S100, when the search result is entered in the answer storage database 112, the media control unit 76 determines whether or not the current access medium is the same as the specified answer medium (step S104 shown in FIG. 22).

When the access medium is the same as the specified answer medium, the media control unit 76 converts the answer and the multi-session ID for the access medium (step S105), and transmits the result to the user by the access medium (step S106).

Then, the media control unit 76 determines whether or not the access medium is a bi-directional medium (step S107). If yes, it transmits a completion/narrowing confirmation message to the user by the access medium, and determines the answer from the user (step S108). When it receives a narrowing request from the user, it converts a narrowing search message for the access medium, transmits the result to the user by the access medium (step S109), and performs the processes in and after step S97 shown in FIG. 21.

In step S104, when the access medium is different from the specified answer medium, the answer process unit 123 identifies an available medium for an answer by referring to the answer management table shown in FIG. 23 (step S110) and prepares for the answer for the answer medium (step S111).

Then, the answer process unit 123 refers to the answer management table to determine the possibility of an automatic answer (step S112). When an automatic answer can be made (true), it is determined that an automatic answer is provided later from the system 72 to the user, and an answering process is performed for the answer medium (step S113). This answering process is described later.

Next, the media control unit 76 converts a service termination message for the access medium, and provides it for the user by the access medium (step S114). Then, the session information integral management unit 75 determines whether or not the multi-session ID is to be stored (step S115). When the multi-session ID is stored, the process is terminated. If it is not stored, the multi-session ID is deleted (step S116), thereby terminating the process.

If the automatic answer cannot be made (false) in step S112, the answer process unit 123 determines that the user requests the system 72 for an answer later, and the processes in and after step S114 are performed. If the access medium is not a bi-directional medium in step S107, and a termination request is received from the user in step S108, then the processes in and after step S114 are performed.

In addition, if the type of the continuing process is obtaining an answer in step S103 shown in FIG. 21, the processes in and after step S104 shown in FIG. 22 are performed.

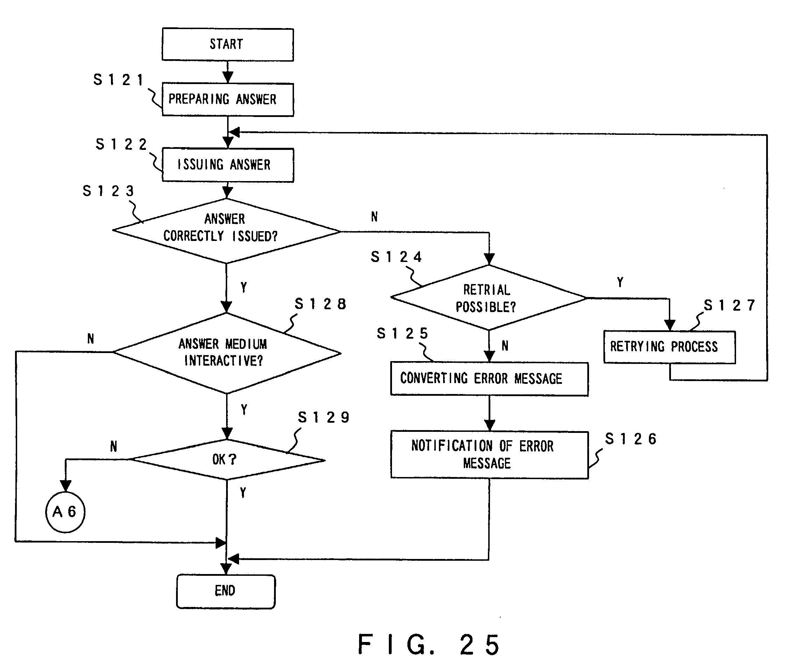

FIG. 25 is a flowchart of the answering process for the answer medium in step S113 shown in FIG. 22. First, the user information process unit 132 obtains an address, etc. of the available medium corresponding to the answer medium from the available media information table shown in FIG. 18 (step S121). In addition, the answer process unit 123 obtains an answer issue date and time, etc. from the answer management table shown in FIG. 23, prepares for an answer for the answer medium, and awaits the obtained answer issue date and time.

On the answer issue date and time, the media control unit 76 issues the answer and the multi-session ID to the address of the answer medium (step S122), and determines whether or not the issue of the answer is normal (step S123). If it is abnormal, then it is determined whether or not the answer medium allows a retrying process (step S124).

If it does not allow a retrying process, then an entered available medium is selected from the available media information table, and an answer error message for the answer medium is converted for the selected medium (step S125). Then, the error message is given to the user by the selected medium (step S126), thereby terminating the process. If the medium allows the retrying process, then the retrying process is performed (step S127) and the processes in and after step S122 are repeated.

If the answer is normally issued in step S123, the media control unit 76 performs the processes similar to those in steps S107 and S108 shown in FIG. 22 (step S128 and S129) for the answer medium. Then, in step S128, if the answer medium is not a bi-directional medium, the process terminates. If a narrowing request is received from the user in step S129, the processes in and after step S109 shown in FIG. 22 are performed.

If the user does not perform the information searching process for a predetermined period, then the system 72 deletes the multi-session information from the multi-session management database 92 in the multi-session ID automatically deleting process similar to the process shown in FIG. 12.

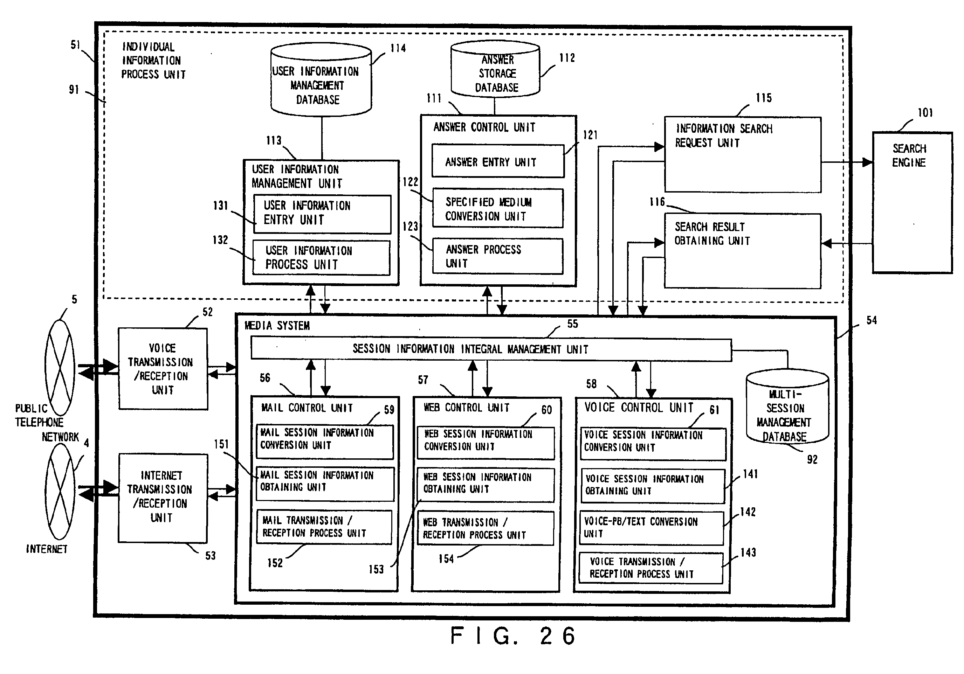

The information search system based on the session management system 51 shown in FIG. 2B is described below by referring to FIGS. 26 through 62.

FIG. 26 shows the configuration of such an information search system. The information search system shown in FIG. 26 includes the session management system 51 and the search engine 101, and has a site for the information search service in Internet 4. The search engine 101 can be provided inside the session management system 51 instead of outside the system 51. The session management system 51 contains the individual information process unit 91 having the configuration similar to that shown in FIG. 13.

The voice transmission/reception unit 52 is an interface between the public telephone network 5 and the system 54, and controls the transmission and reception of voice data. The Internet transmission/reception unit 53 is an interface between Internet 4 and the media system 54, and controls the transmission and reception of Internet data.

The media system 54 comprises the session information integral management unit 55 for integrally managing a session including e-mail, WEB, and voice as a multi-session, the mail control unit 56, the WEB control unit 57, and the voice control unit 58 for using the system 51 through each medium, and the multi-session management database 92.

The mail control unit 56 comprises the mail session information conversion unit 59, a mail session information obtaining unit 151, and a mail transmission/reception process unit 152. The mail transmission/reception process unit 152 controls the transmission/reception of e-mail, and the mail session information obtaining unit 151 obtains session information such as multi-session ID, etc. from the received e-mail data. The mail session information conversion unit 59 converts the obtained session information into a format which can be processed by the session information integral management unit 55.

The WEB control unit 57 comprises the WEB session information conversion unit 60, a WEB session information obtaining unit 153, and a WEB transmission/reception process unit 154. The WEB transmission/reception process unit 154 controls the transmission and reception of WEB data, and the WEB session information obtaining unit 153 obtains session information from the received data. The WEB session information conversion unit 60 converts the obtained session information into the format which can be processed by the session information integral management unit 55.

The voice control unit 58 comprises the voice session information conversion unit 61, the voice session information obtaining unit 141, the voice-PB/text conversion unit 142, and the voice transmission/reception process unit 143 shown in FIG. 14. In this case, the voice session information conversion unit 61 converts the session information obtained by the voice session information obtaining unit 141 into the format which can be processed by the session information integral management unit 55.

With the configuration, when an information searching process and a narrowing search process are performed, a consistent searching process can be performed using e-mail, WEB, and voice by the session management performed by the session information integral management unit 55. Thus, the process of the session management system 51 can be specialized as an information searching process, and the user can continuously search for information using an arbitrary medium among e-mail, WEB, and voice.

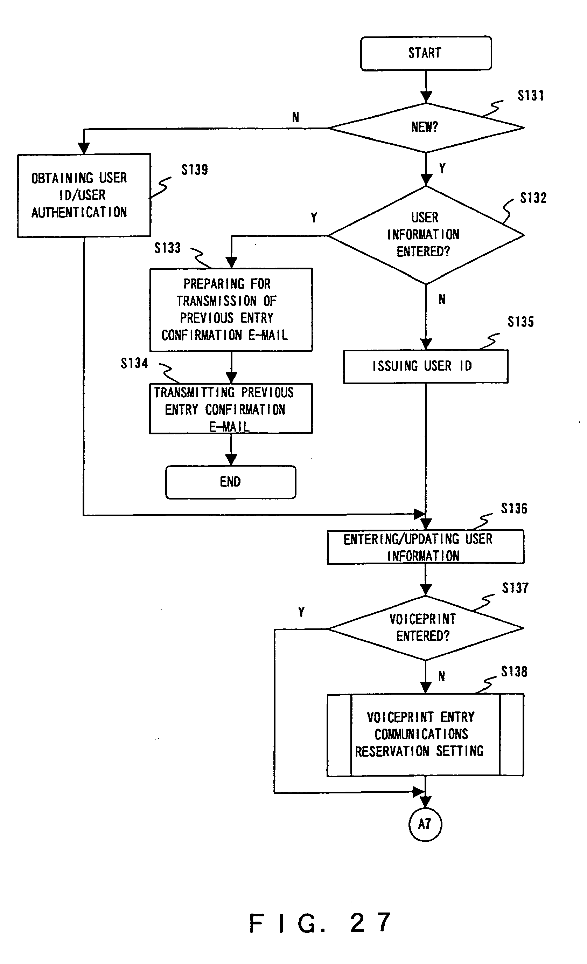

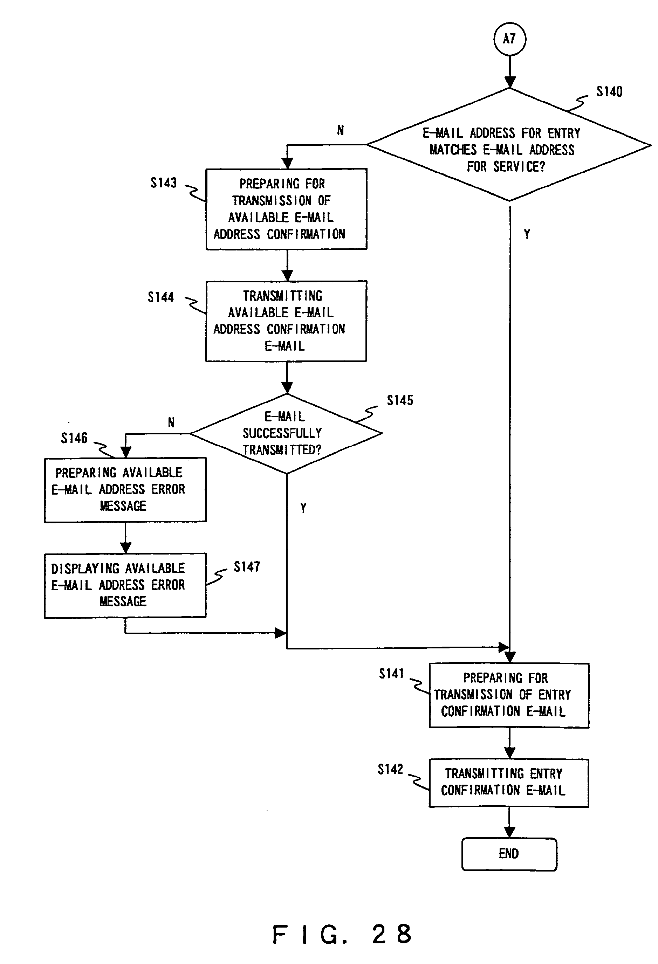

FIGS. 27 and 28 are flowcharts of the user information entering process by e-mail in the information search system shown in FIG. 26.

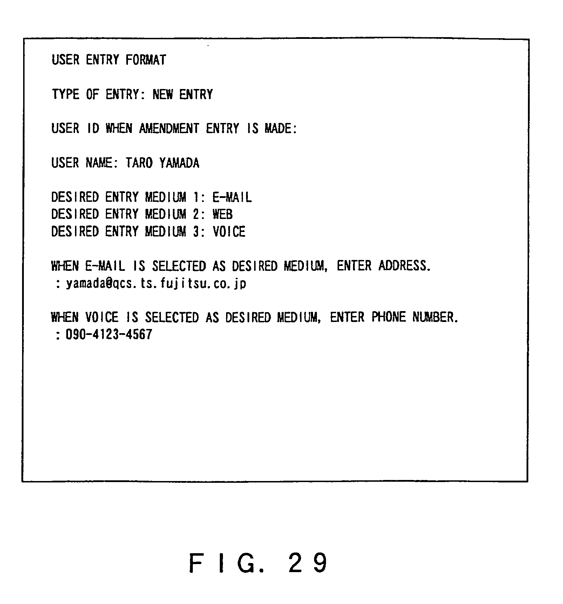

A user who desires a user entry obtains a prescribed e-mail user entry format as shown in FIG. 29. In the format, the user describes in e-mail the type of entry (new entry, amendment entry, etc.), a user ID (for an amendment entry), a user name, a desired medium to be entered (e-mail address, WEB, voice, etc.), address information of the desired medium (e-mail address, telephone number, etc.), etc. and transmits the e-mail in the format to the session management system 51.

The mail control unit 56 extracts the user information from the received e-mail, and the user information process unit 132 determines whether the entry type is a new entry or an amendment entry (step S131 shown in FIG. 27). If it is a new entry, then it is determined whether or not the user information of the user has already been entered (step S132).

If the user information has already been entered, the mail control unit 56 describes that the user information has already been entered, and generates and prepares previous entry confirmation e-mail with the entered user information attached to the e-mail (step S133). Then, it transmits the previous entry confirmation e-mail to the user (step S134), thereby terminating the process.

If the user information has not been entered, the user information entry unit 131 issues a user ID to the user (step S135), and enters the user ID and the user information in an entry format in the user information table shown in FIG. 17 and the user available media information table shown in FIG. 18 (step S136).

Then, the user information process unit 132 refers to the available media information table, and determines whether or not voice is included in the media which the user desires to enter, and whether or not a voiceprint has been entered as authentication information (password) (step S137). If voice is included in the desired media, and the voiceprint has not been entered, the voice control unit 58 calls up the user in the voiceprint entry communications reservation setting process, and enters the voiceprint of the user (step S138). This process is described later.

If the type of entry is an amendment entry in step S131, the user information process unit 132 obtains the user ID of the user to perform the user authentication (step S139), and performs the processes in and after step S136. In this case, the contents of the user information table and the available media information table are rewritten depending on the contents of the amendment entry.

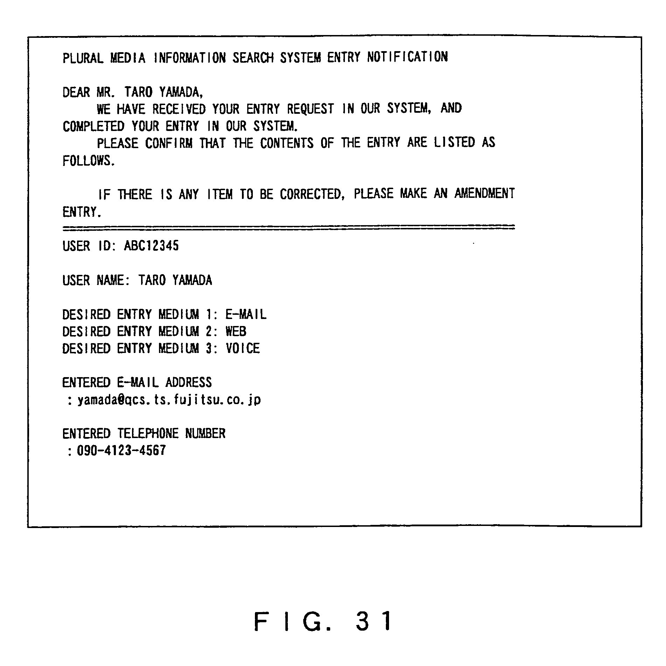

Then, the user information process unit 132 determines whether or not the e-mail address used by the user for the user entry matches the e-mail address used when an information search service is provided (step S140 shown in FIG. 28). If they match each other, the mail control unit 56 generates and prepares entry confirmation e-mail to which a result message of the user information entering process and the entered user information are attached as shown in FIG. 31 (step S141), transmits the mail to the user (step S142), and terminates the process.

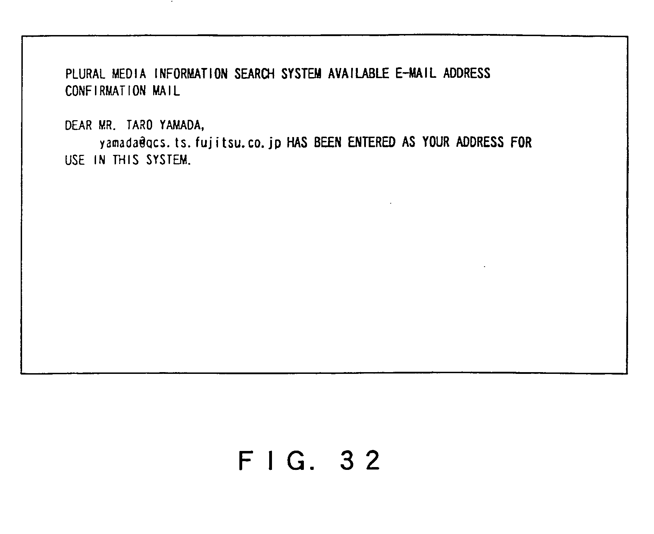

If the e-mail addresses do not match each other in step S140, the mail control unit 56 generates and prepares available e-mail address confirmation e-mail to which a predetermined text such as 'The system available e-mail address has been entered.', etc. is attached as shown in FIG. 32 (step S143). Then, it transmits the e-mail to the available e-mail address (step S144), and determines whether or not it has been normally transmitted (step S145).

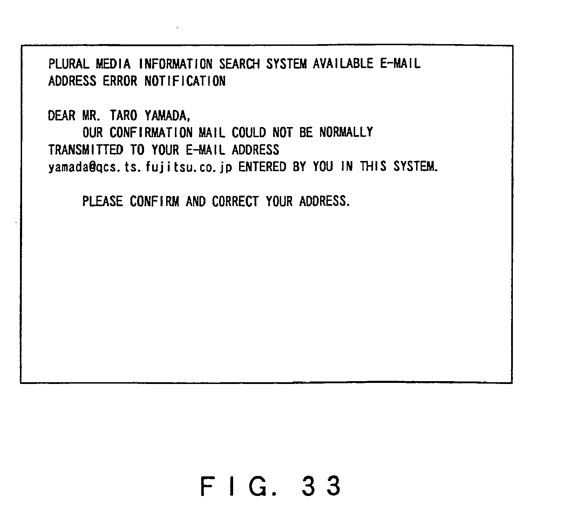

If the available e-mail address confirmation e-mail has been normally transmitted, the processes in and after step S141 are performed. If it has not been normally transmitted, then the WEB control unit 57 notifies that the available e-mail address entered by the user is erroneous as shown in FIG. 33, and generates and prepares an available e-mail address error message prompting the user to correct the user information (step S146).

Then, it enters and displays the message on the corresponding WEB page (my page) exclusive to the user on the service site for the user entry to notify the user of the message (step S147), thereby performing the processes in and after step S141.

If voice is not contained in the requested media in step S137 shown in FIG. 27, or if voice is contained in the desired media and the voiceprint has already been entered, then the processes in and after step S140 shown in FIG. 28 are performed.

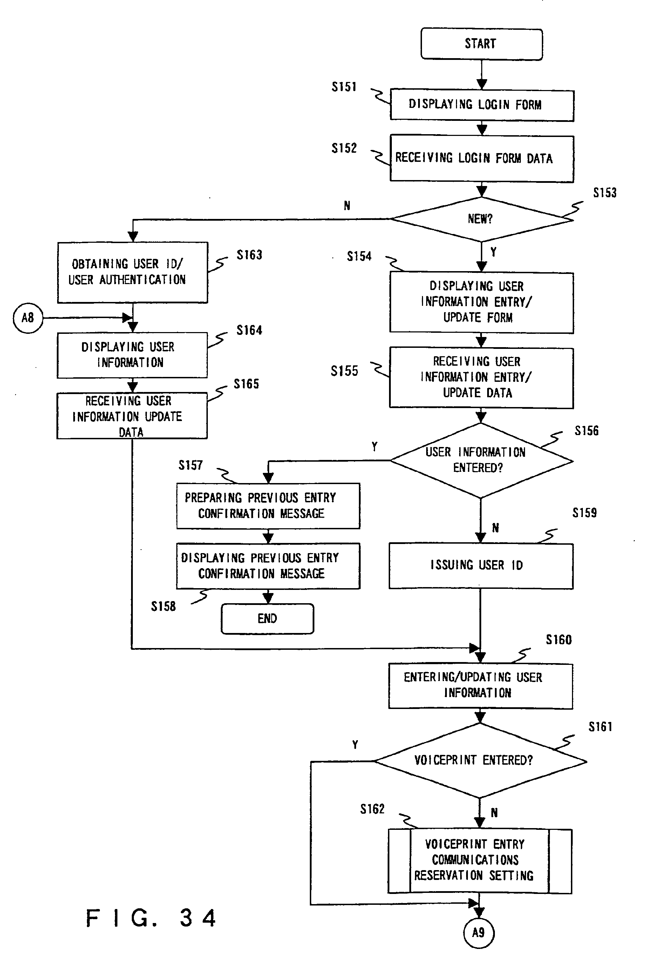

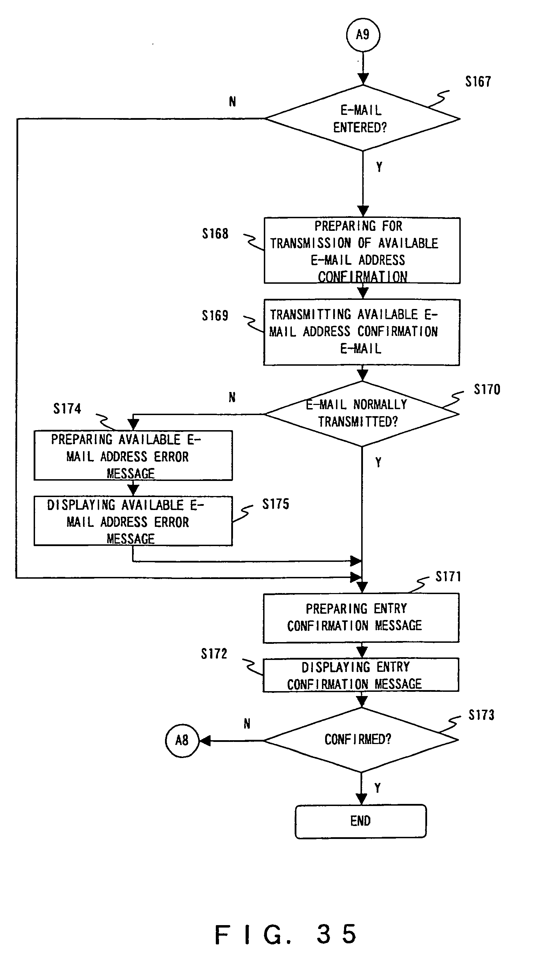

FIGS. 34 and 35 are flowcharts of the user information entering process by WEB performed by the information search system shown in FIG. 26.

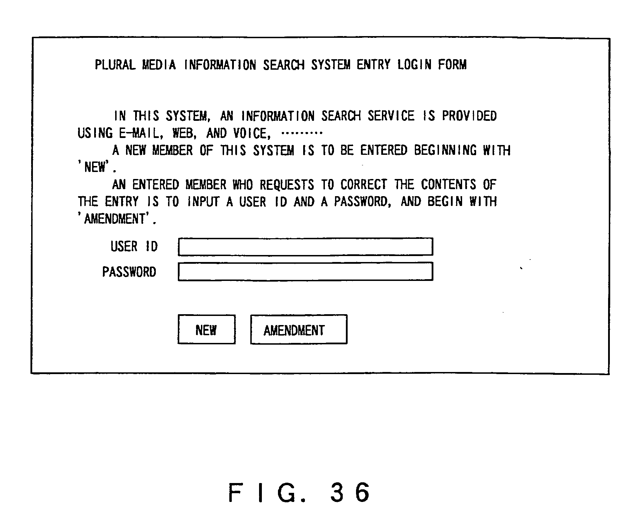

A user requesting a user entry accesses the service site for a user entry, and the WEB control unit 57 displays an entry login form in which a service guide and selection items for a new entry and an amendment entry are displayed as shown in FIG. 36 (step S151 shown in FIG. 34). If the user selects either selection item in the entry login form and transmits the form to the system 51, then the system 51 receives it, and the WEB control unit 57 checks whether or not the received data is erroneous (step S152).

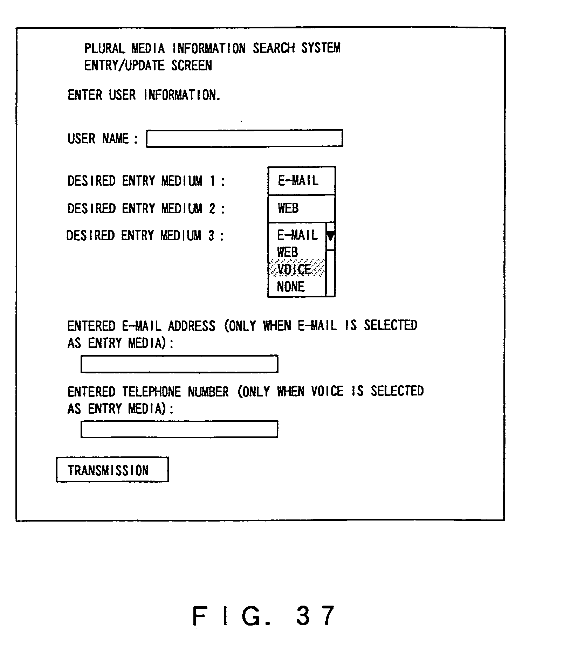

The WEB control unit 57 determines whether the type of entry is a new entry or an amendment entry from the received entry login form (step S153). If it is a new entry, the WEB control unit 57 displays a user information entry/update form as shown in FIG. 37, in which user information as shown in FIG. 29 is described (step S154). In this form, the type of entry is omitted.

If the user enters necessary items in the user information entry/update form, and transmits the form to the system 51, then the system 51 receives it, and the WEB control unit 57 performs an error check for the received data and confirms that all necessary items are specified (step S155).

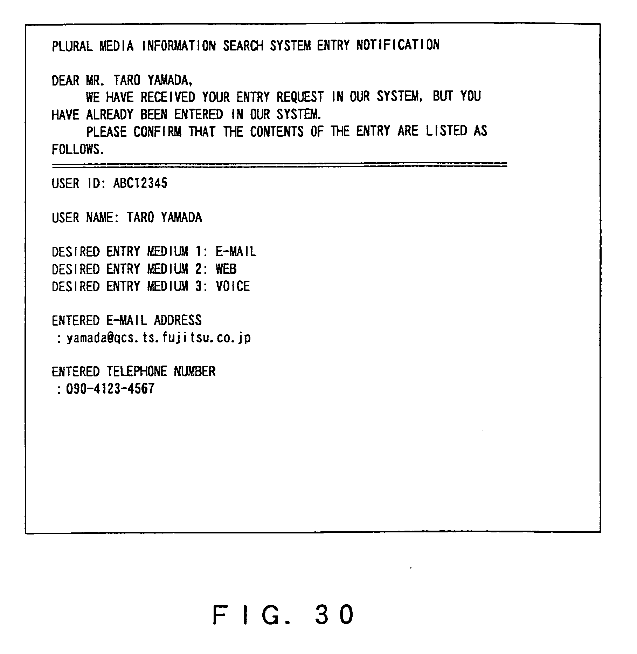

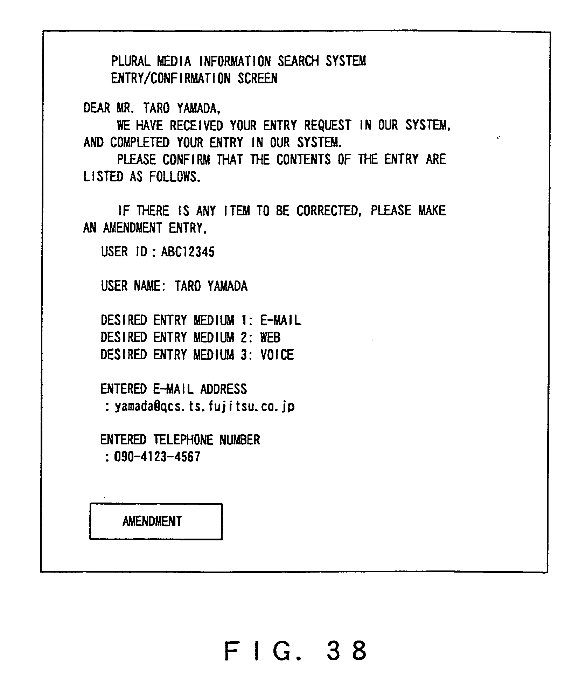

The processes in steps S156 through S162 are the same as the processes in steps S132 through S138 shown in FIG. 27. In this case, the WEB control unit 57 generates and prepares an entry confirmation WEB page as shown in FIG. 38 instead of the previous entry confirmation e-mail shown in FIG. 30, and displays it in step S158. If the type of entry is a new entry, the user information entry unit 131 enters the issued user ID and the user information in the user information entry/update form in the user information table and the available media information table in step S160.

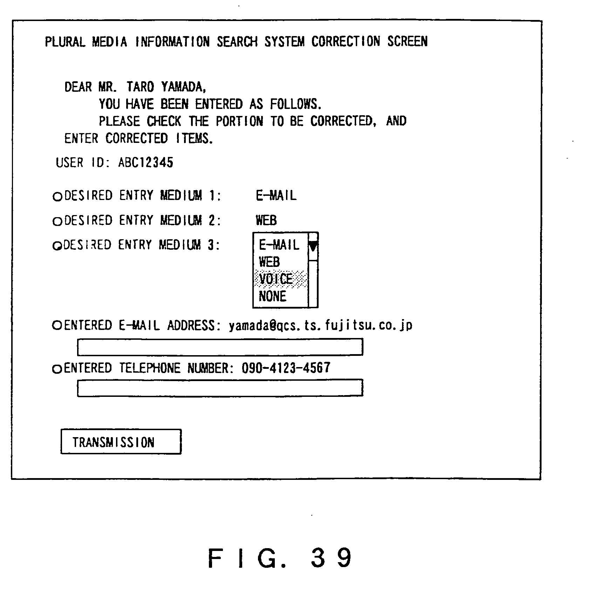

If the type of entry is an amendment entry in step S153, the user information process unit 132 performs user authentication (step S163), and the WEB control unit 57 displays the entered user information on the user information update screen as shown in FIG. 39 (step S164). If the user amends the displayed user information, and transmits it to the system 51, then the session management system 51 receives it (step S165), and performs the processes in and after step S160. In this case, the contents of the user information table and the available media information table are rewritten according to the amended user information.

When the voice entry communications reservation setting process in step S162 is completed, the WEB control unit 57 determines whether or not the e-mail has been entered by a new entry or an amendment entry (step S167 shown in FIG. 35). When the e-mail is entered, the processes similar to those in steps S143 through S147 as shown in FIG. 28 are performed (steps S168 to S175).

Then, the WEB control unit 57 generates and prepares an entry confirmation WEB page to which a result message of the user information entering process and the entered user information are attached as shown in FIG. 38 (step S171), and displays it (step S172). At this time, the user determines whether or not the entered information displayed on the entry confirmation WEB page is correct. If it is correct, then the user transmits a termination instruction. If it is not correct, then the user transmits an amendment instruction.

Then the WEB control unit 57 determines the instruction from the user. If it is an amendment instruction, then the WEB control unit 57 repeats the processes in and after step S164 shown in FIG. 34. If it is a termination instruction, the process terminates. If the e-mail has not been entered in step S167, then the processes in and after step S171 are performed.

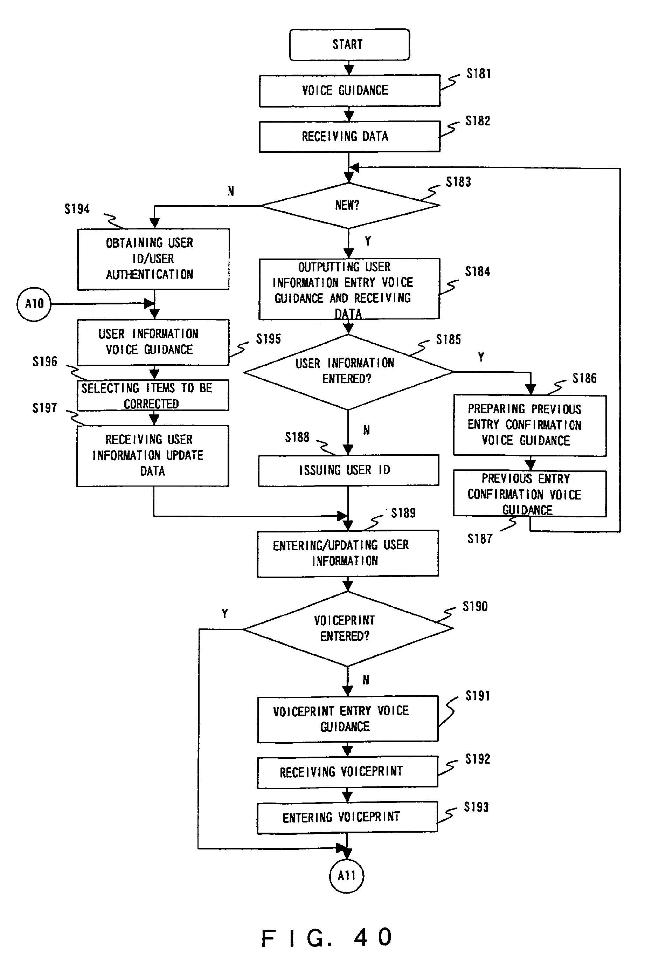

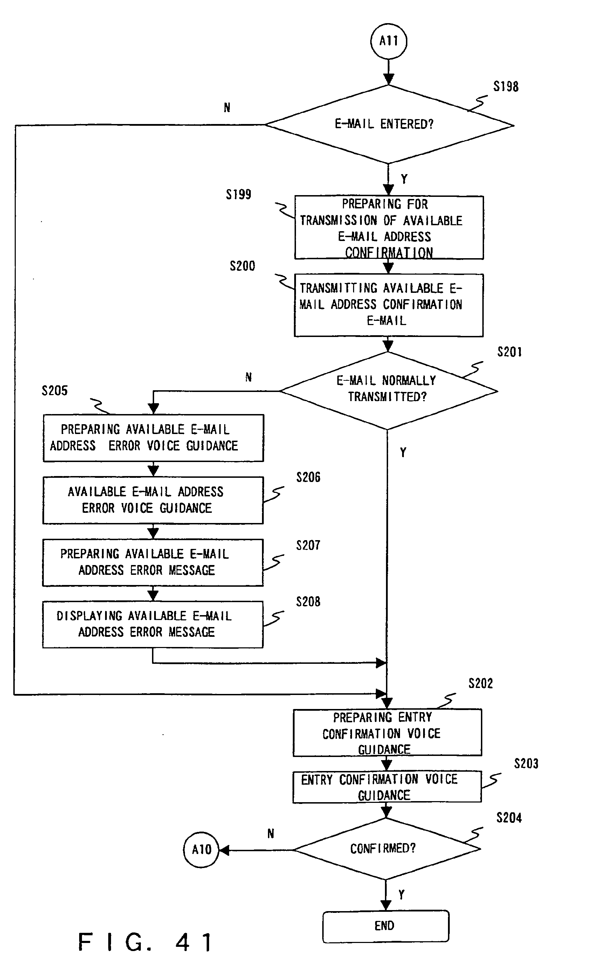

FIGS. 40 and 41 are flowcharts of the user information entering process by voice in the information searching system shown in FIG. 26. In the process, a request from the user to the system 51 is transmitted by voice or a PB signal, etc.

A user who desires a user entry calls up the system 51, and the voice control unit 58 transmits to the user a service starting message and a message inquiring the type of entry, outputs voice guidance for login (step S181 shown in FIG. 40). According to the voice guidance, The user inputs a request for a new entry or an amendment entry by voice or a PB signal, etc. to the system 51, and the system 51 receives input data (step S182).

Then, the voice control unit 58 determines whether the type of entry requested by the user is a new entry or an amendment entry (step S183). If it is a new entry, each item of the user information as shown in FIG. 37 is inquired by voice guidance, and the user inputs information piece by piece according to the voice guidance (step S184). Then, the session management system 51 receives the input data.

The processes in steps S185 through S190 are the same as those in steps S132 through S137. In this case, the voice control unit 58 generates and prepares a previous entry confirmation message instead of the previous entry confirmation e-mail shown in FIG. 30 in step S186, and notifies the user of the message by voice guidance in step S187. If the type of entry is a new entry, then the user information entry unit 131 enters the issued user ID and the input user information in the user information table and the available media information table in step S189.

If the type of entry is an amendment entry in step S183, the user information process unit 132 performs user authentication using the password of a PB signal and a voiceprint password, etc. as a user ID (step S194).

Then, the voice control unit 58 sequentially reads entered user information (step S195) according to voice guidance, and outputs an inquiry message asking the user which information is to be amended (item to be amended) (step S196). When the user selects an item to be amended according to voice guidance and inputs updated data, the system 51 receives the input data (step S197), and performs the processes in and after step S189. In this case, the contents of the user information table and the available media information table are rewritten depending on the contents of the amendment entry.

In step S190, if voice is included in the desired media, and a voiceprint has not been entered, then the voice control unit 58 transmits voice guidance informing that a voiceprint is being entered to the user (step S191), and requires the user to input the voiceprint data (step S192). When the voice control unit 58 receives the voiceprint data, it encodes the voiceprint. Then, the user information entry unit 131 enters the encoded voiceprint data as the authentication information in the available media information table shown in FIG. 18 (step S193), and performs the process shown in FIG. 41.

The processes in steps S198 through S201 shown in FIG. 41 are similar to those in steps S167 through S170 shown in FIG. 35. If the available e-mail address confirmation e-mail has been normally transmitted in step S201, then the voice control unit 58 generates and prepares a message including a result of the user information entering process and the entered user information (step S202), and notifies the user of the message by the voice guidance (step S203). At this time, the user determines whether or not the notified entry information is correct. If it is correct, the user transmits a termination instruction. If it is not correct, the user transmits an amendment instruction.

Then, the voice control unit 58 determines the instruction from the user (step S204). If it is an amendment instruction, the voice control unit 58 repeats the processes in and after step S195. If it is a termination instruction, then the process is terminated.

If the available e-mail address confirmation e-mail cannot be normally transmitted in step S201, then the voice control unit 58 generates and prepares an error message notifying that the available e-mail address entered by the user is erroneous (step S205). Then, it notifies the user of the error message by voice guidance (step S206). The processes in steps S207 and S208 are similar to those in steps S146 and S147 shown in FIG. 28. Then, the processes in and after S202 are performed.

If e-mail has not been entered in step S198, the processes in and after step S202 are performed. If voice is not included in the desired media in step S190 shown in FIG. 40, or if voice is included in the desired media and a voiceprint has already been entered, then the processes in and after step S198 shown in FIG. 41 are performed.

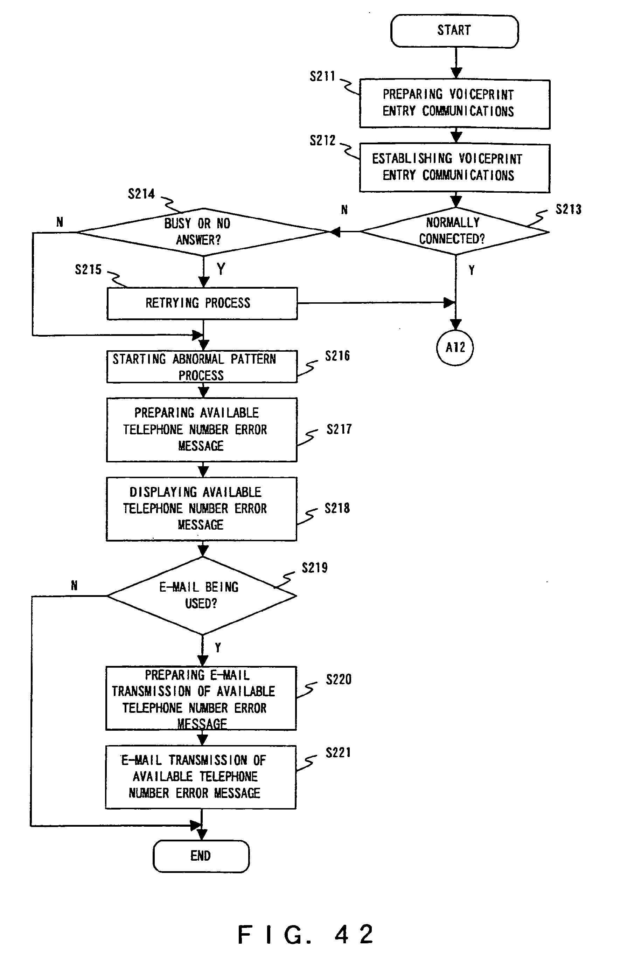

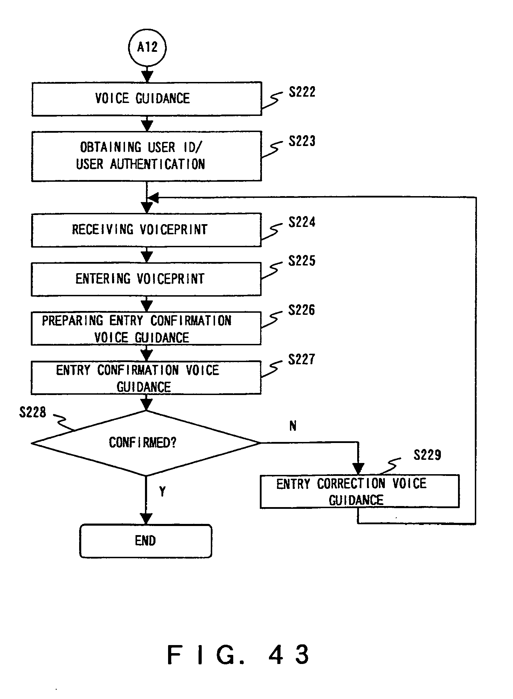

FIGS. 42 and 43 are flowcharts of the voiceprint entry communications reservation setting process in step S138 shown in FIG. 27 and step S162 shown in FIG. 34. In this process, a voiceprint is entered by telephone.

First, the voice control unit 58 prepares for the voice entry communications (step S211), establishes voice entry communications for the entered telephone number of the user (step S212), and determines whether or not it has been successfully connected to the user terminal (step S213). If it has not been normally connected, then it is determined whether the state of the user terminal is 'busy' or 'no answer' (step S214). If the user terminal is in one of these states, then the retrying process is performed (step S215).

In the retrying process, calls are made at intervals and times set on the system side in advance, for example, five times every third minutes. If a connection cannot be finally made, an abnormal pattern process is started (step S216).

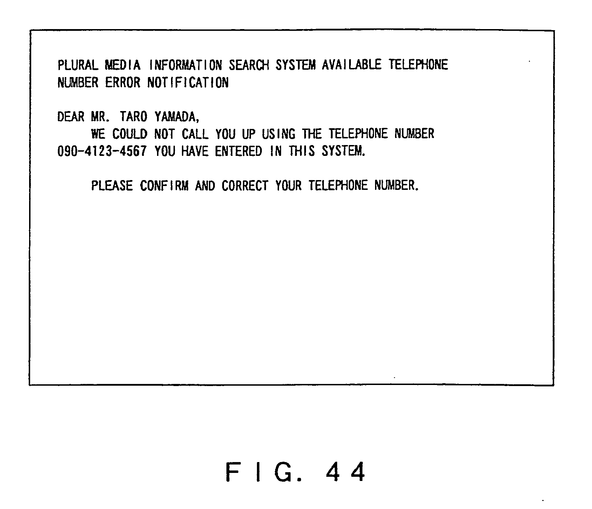

In the abnormal pattern process, the WEB control unit 57 generates and prepares an available telephone number error message informing that the entered telephone number of the user is erroneous as shown in FIG. 44 (step S217). Then, the error message is entered and displayed on the user exclusive WEB page (my page), thereby notifying the user (step S218).

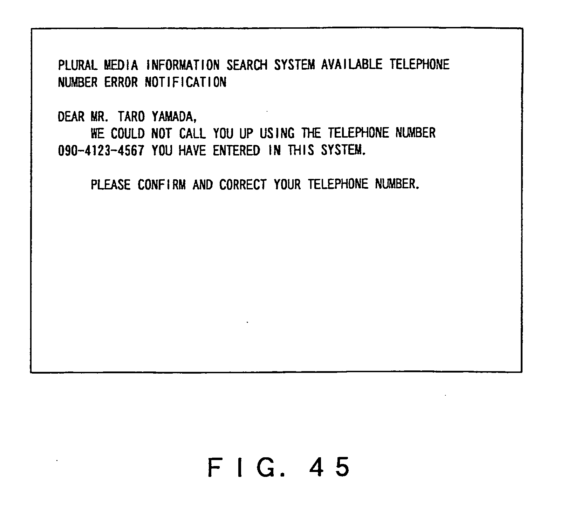

Then, the user information process unit 132 refers to the available media information table shown in FIG. 18, determines whether or not e-mail is contained in the desired media to be entered (step S219). If e-mail is not contained, then the process terminates. If e-mail is contained, then the mail control unit 56 notifies that the user entered available telephone number is erroneous as shown in FIG. 45, and generates and prepares e-mail of an available telephone number error message prompting the user to correct the user information (step S220). Then, the e-mail is transmitted to the user (step S221), and the process is terminated.

In steps S213 and S215, when the user terminal can be correctly connected, the voice control unit 58 transmits the voice guidance about the start of the voiceprint entry to the user (step S222 in FIG. 43). Then, the user is prompted to input the user ID such as a password, etc. of a PB signal, and the user information process unit 132 performs user authentication (step S223).

The processes in the next steps S224 and S225 are similar to those in steps S192 and S193 shown in FIG. 40. When the voiceprint is entered, the voice control unit 58 generates and prepares an entry confirmation message by converting the entered voiceprint data into voice (step S226), and notifies the user of the message through the voice guidance (step S227). At this time, the user confirms the voiceprint input by the user through the voice transmitted from the system 51, instructs the termination if no correction is required, and instructs a correction if it is required.

Then, the voice control unit 58 determines the instruction from the user (step S228). If it is a correction instruction, then the voice control unit 58 notifies the user that the voiceprint entry is to be corrected through the voice guidance (step S229), and the processes in and after step S224 are repeated until the user instructs the termination. When the user instructs the termination, the process terminates.

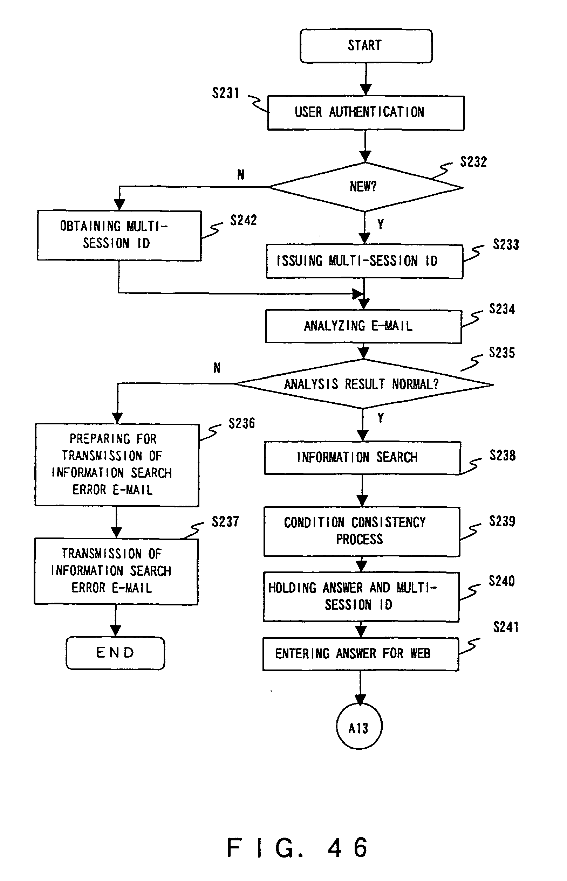

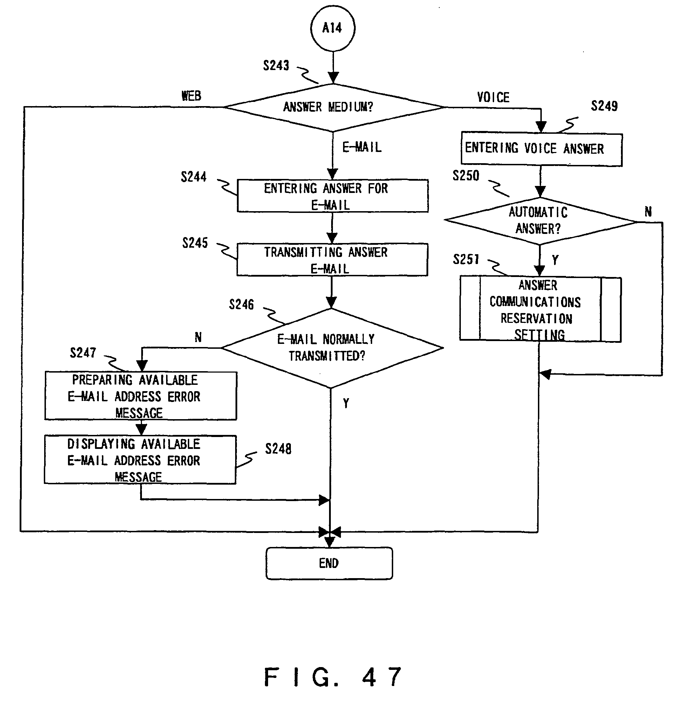

FIGS. 46 and 47 are flowcharts of the information searching process by e-mail in the information search system shown in FIG. 26.

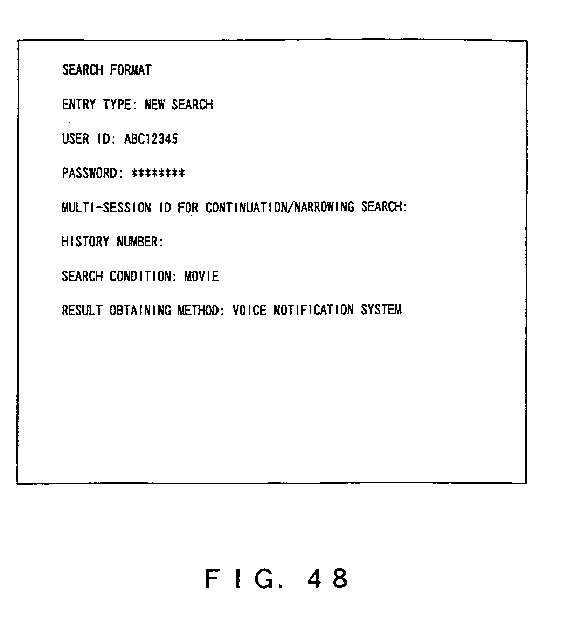

An already entered user who desires to search for information has to obtain a predetermined e-mail searching format as shown in FIG. 48. Then, according to the format, the information such as a user ID, authentication characters such as a password, etc., the type of search, that is, new search/continuation (obtaining an answer, or narrowing search), a multi-session ID, a history number, a search condition (keyword, etc.), a result obtaining method (answer medium), etc., is described, and the e-mail of the filled-in format is transmitted to the system 51.

When the answer medium is voice, the information such as whether the system 51 notifies the user of the result by calling up the user, or the user obtains the result by calling up the system 51 is contained in the result obtaining method.

Then, the user information process unit 132 of the user information management unit 113 determines whether the user information described in the e-mail transmitted from the user matches the user information entered in the user information table shown in FIG. 17, and performs user authentication (step S231 shown in FIG. 46). Then, it is confirmed that the authentication result is correct.

Then, the session information integral management unit 55 determines whether the instruction of the e-mail is new search or continuation (narrowing search) (step S232). If it is new search, the session information integral management unit 55 issues a multi-session ID, and enters necessary information in the multi-session information table shown in FIG. 8 (step S233).

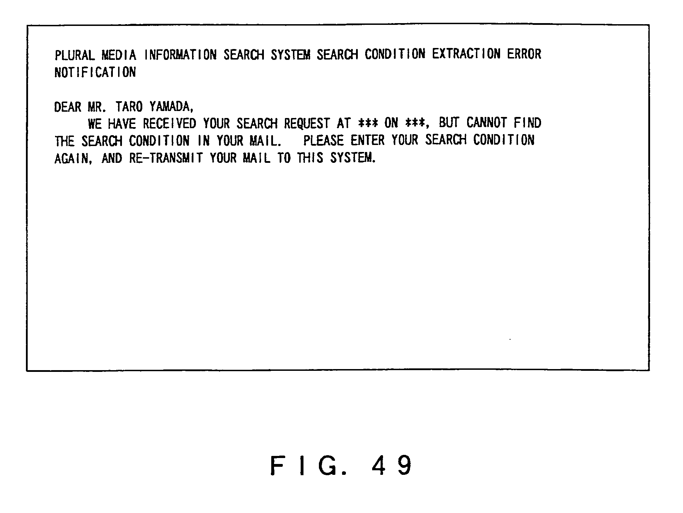

Then, the mail control unit 56 analyzes the e-mail, extracts a search condition (step S234), and determined whether or not the search condition can be correctly extracted (step S235). If the search condition cannot be correctly extracted, search condition extraction error notification e-mail (information search error e-mail) informing that it cannot be correctly extracted can be generated and prepared as shown in FIG. 49 (step S236). Then, the e-mail is transmitted to the user (step S237), thereby terminating the process.

If the search condition can be correctly extracted in step S235, the media system 54 transmits the search condition to the information search request unit 115, and the information search request unit 115 transmits the search condition to the search engine 101, and requests it to search for the information (step S238). Then, the search result obtaining unit 116 receives a search result from the search engine 101, and transmits it to the media system 54.

Then, the session information integral management unit 55 performs a condition consistency process, and issues a history number for the multi-session ID to search for the condition and manage the history of the results (step S239). If the current searching process is performed using a history number, then a new multi-session ID and a corresponding history number can be issued for managing multi-session IDs and history numbers.

The session information integral management unit 55 associates the multi-session ID with the history number, stores them in the multi-session history information table shown in FIG. 10. The answer entry unit 121 of the answer control unit 111 associates the multi-session ID, the history number and the search result with each other, and stores them in the answer management table shown in FIG. 23 and the answer information table shown in FIG. 24 (step S240).

Then, the WEB control unit 57 enters the correspondence among the multi-session ID, the history number, and the search result (answer) on the user exclusive WEB page (step S241), and performs the process shown in FIG. 47. In step S232, when the instruction by the e-mail is 'continuation', the session information integral management unit 55 obtains the multi-session ID from the e-mail, and enters the necessary information in the multi-session information table corresponding to the multi-session ID (step S242). Then, the processes in and after step S234 are performed.

The answer control unit 111 refers to the answer management table and the answer information table, and maintains the information corresponding to the multi-session ID. In this case, in step S235, the media system 54 analyzes the information stored in the answer control unit 111 with the search condition, and transmits the search condition to the information search request unit 115.

When an answer is entered on the WEB page in step S241, the mail control unit 56 extracts an answer medium from the e-mail transmitted from the user, and determines which is the answer medium, e-mail, WEB, or voice (step S243 shown in FIG. 47). If the answer medium is WEB, the process terminates.

If the answer medium is e-mail, the mail control unit 56 refers to the multi-session ID, the history number, and the search result stored as associated with each other in the multi-session information table, the answer management table, and the answer information table through the session information integral management unit 55 and the answer control unit 111 (step S244). The answer e-mail to which, for example, a combination of the multi-session ID and the history number, or identification information such as a tag, etc. corresponding to the combination, the number of search results, a list of search results, etc. are attached is generated and entered.

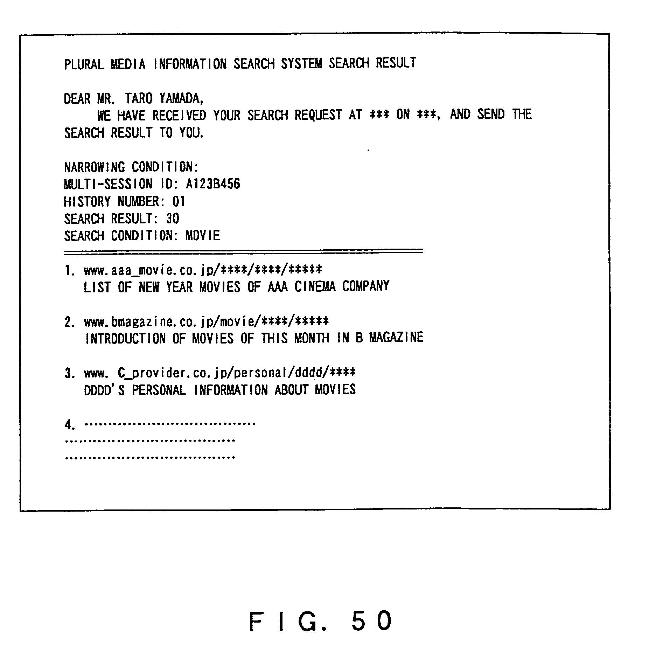

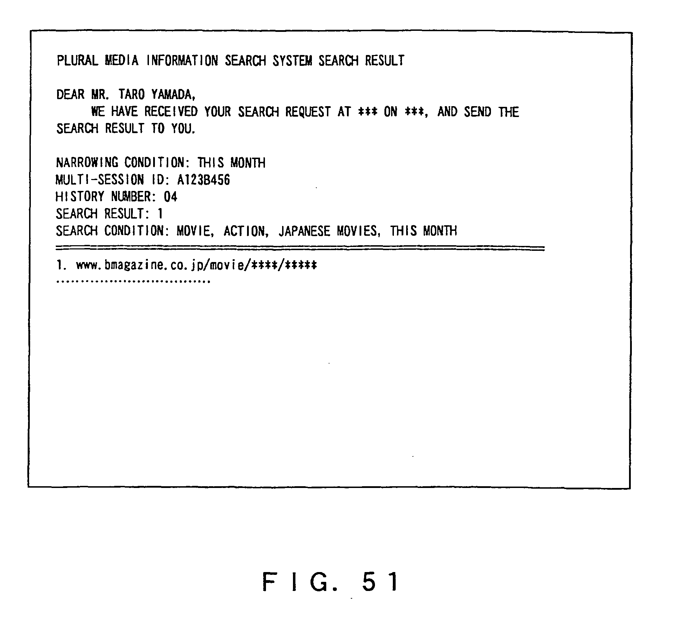

In the case of new search, for example, the answer e-mail as shown in FIG. 50 is generated. In the case of a narrowing search result, for example, the answer e-mail as shown in FIG. 51 is generated. Then, the mail control unit 56 transmits the answer e-mail to the user (step S245), and the processes similar to those in steps S145 through S147 shown in FIG. 28 are performed (step S246 through S248), thereby terminating the process.

If the answer medium is voice in step S243, the voice control unit 58 generates and enters the message containing the information similar to that in the above mentioned answer e-mail (step S249), and determines whether or not an automatic answer can be made by referring to the answer management table (step S250).

When an automatic answer can be made, it is determined that the system 51 automatically answers the user, and an answer is transmitted to the user in the answer communications reservation setting process (step S251), thereby terminating the process. The answer communications reservation setting process is described later. If an automatic answer cannot be made, then it is determined that the user requests the system 51 to obtain an answer later, thereby terminating the process.

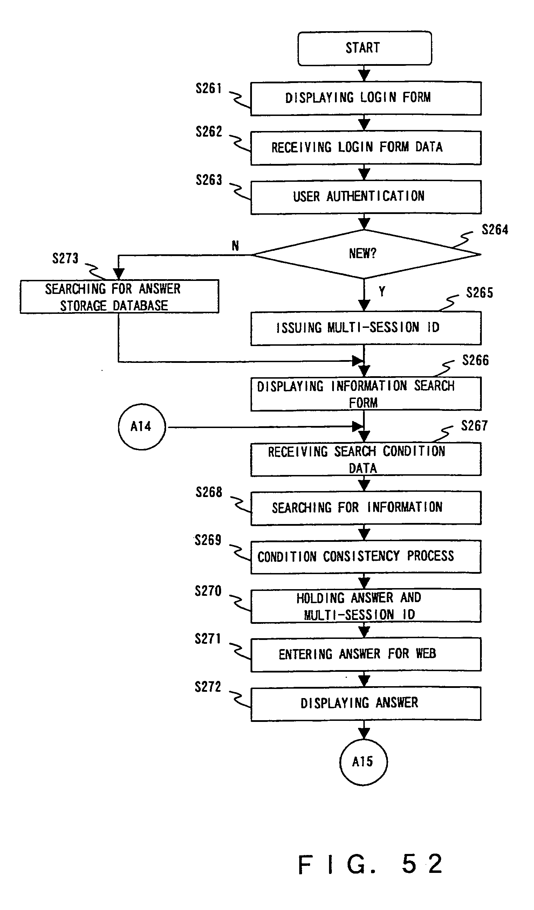

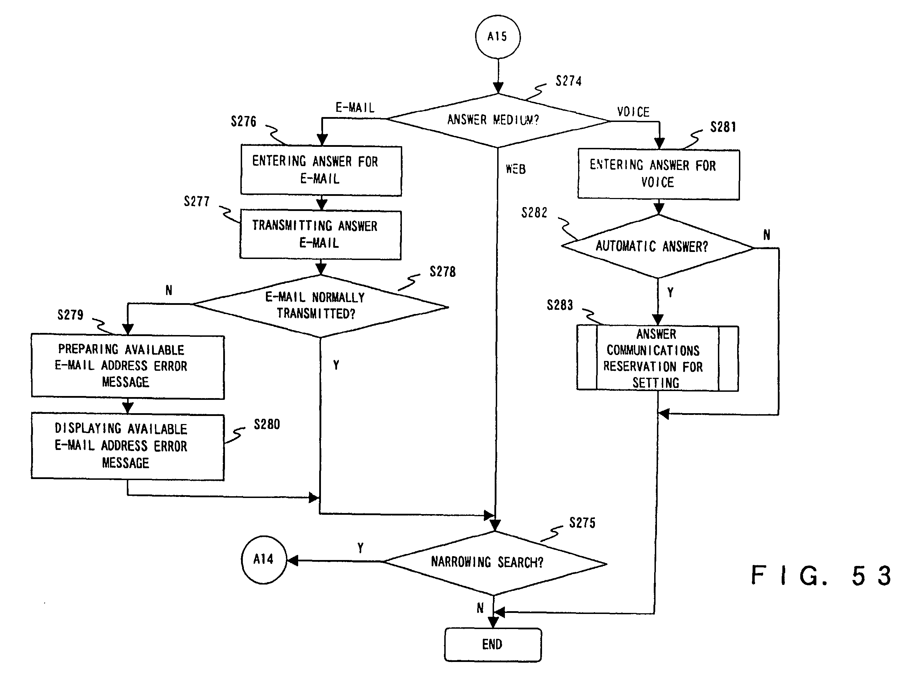

FIGS. 52 and 53 are flowcharts of the information searching process by the WEB in the information searching system shown in FIG. 26.

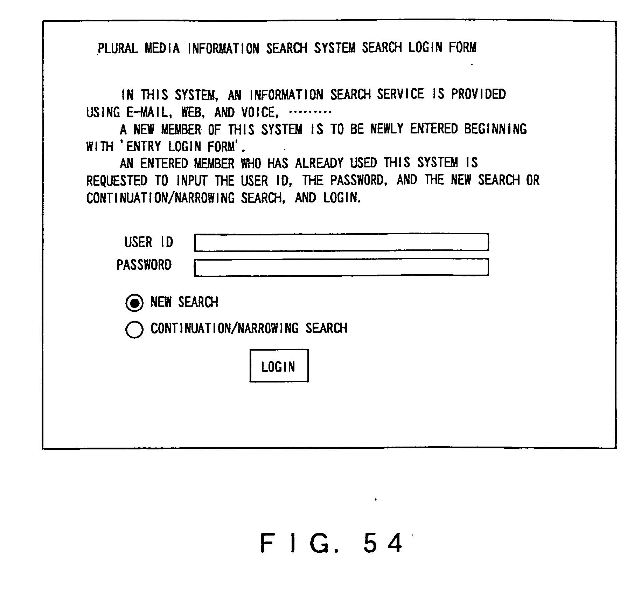

A user who has already been entered and desires information search accesses the site of an information search service, and the WEB control unit 57 displays a search login form on a WEB page as shown in FIG. 54 (step S261 shown in FIG. 52). In the search login form, a service guidance, boxes in which a user ID and authentication information such as a password, etc., are input, and a selection items of new search/continuation (narrowing search) are displayed.

When the user inputs necessary items in the search login form and transmits the form to the system 51, the system 51 receives it, and the WEB control unit 57 checks whether or not there is an error in the received data (step S262).

Then, the user information process unit 132 performs user authentication as in step S231 shown in FIG. 46, and the WEB control unit 57 determines whether the type of process is new search or continuation based on the received search login form (step S264). If it is new search, then the session information integral management unit 55 issues a multi-session ID and enters necessary information in the multi-session information table shown in FIG. 8 (step S265).

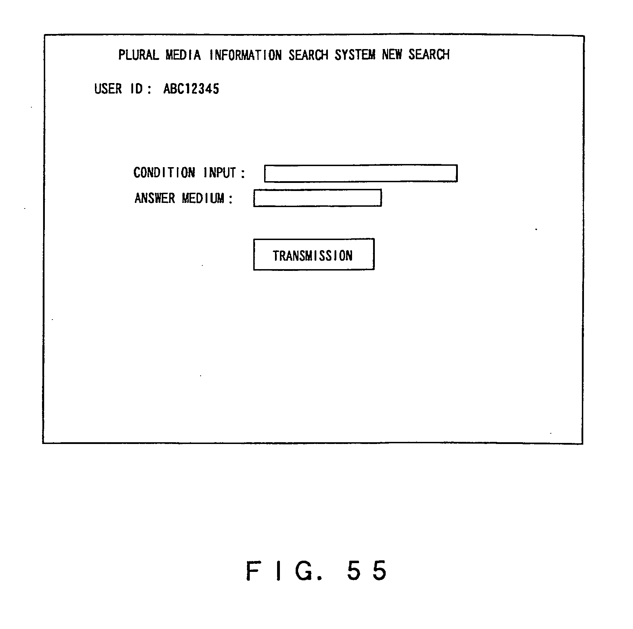

The WEB control unit 57 displays a new information search form as shown in FIG. 55 (step S266). When the user inputs a search condition and an answer medium and transmits them to the system 51, the system 51 receives them, and the WEB control unit 57 checks an error in them, and confirms that the search condition has been normally input (step S267).

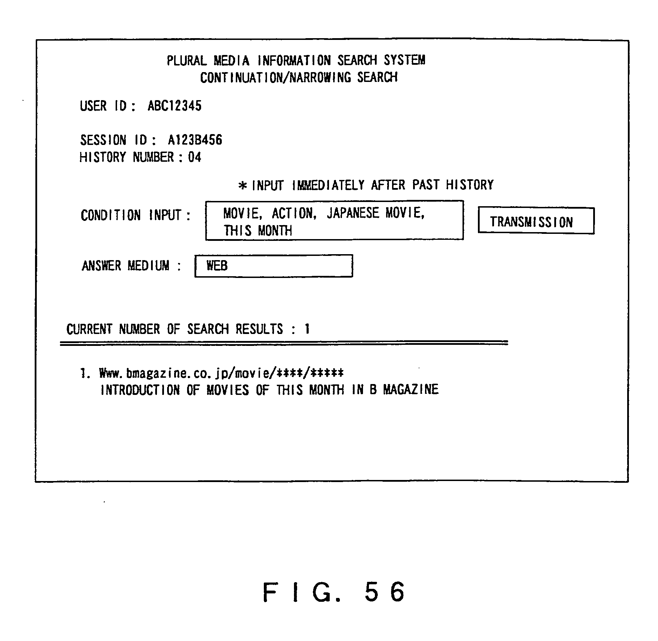

The processes in steps S268 through S271 are the same as those in steps S238 through S241 shown in FIG. 46. Next, the WEB control unit 57 displays an information search answer form on the WEB page as shown in FIG. 56 (step S272), and performs the process shown in FIG. 53. In this information search answer form, an answer entered in step S271 is displayed, and boxes in which search condition for narrowing search and an answer medium are input are displayed.

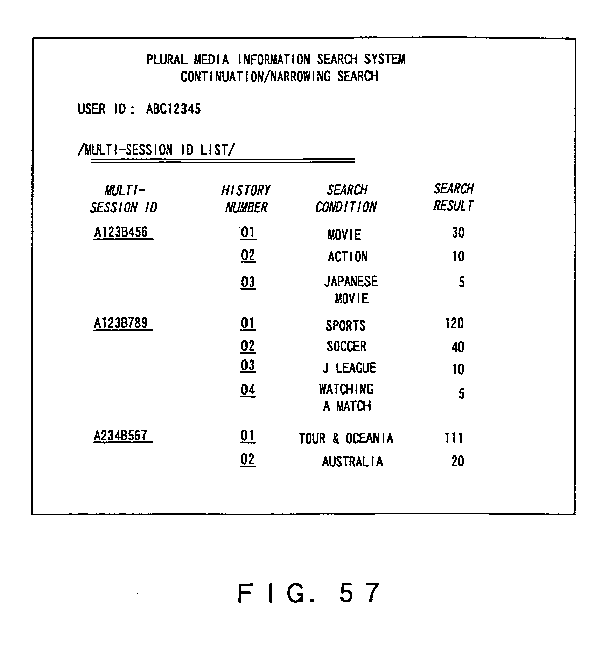

If the type of process is 'continuation' in step S264, the answer process unit 123 of the answer control unit 111 refer to the answer management table and the answer information table to extract necessary information (step S273). Then, the WEB control unit 57 displays a multi-session list screen as shown in FIG. 57 according to the extracted information. On the multi-session list screen, a list of multi-session IDs issued to the corresponding user, history numbers, search conditions, and search results is displayed.

The user selects a specific multi-session ID on the displayed screen. If necessary, the user selects a history number. Then, the WEB control unit 57 obtains the selected multi-session ID and history number. Afterwards, the processes in and after step S266 are performed.

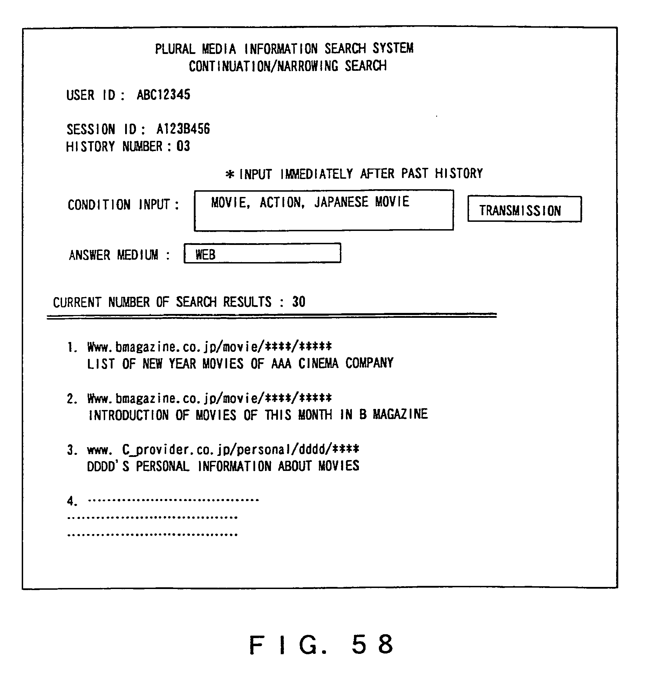

In this case, in step S266, the WEB control unit 57 displays a narrowing information search form as shown in FIG. 58. On this narrowing information search form, a search result corresponding to the obtained multi-session ID and history number is displayed, and boxes in which search condition for narrowing search and an answer medium are input are displayed.

When an information search answer form is displayed on the WEB page in step S272, the WEB control unit 57 extracts the answer medium input in the information search form, and determines which is the answer medium, e-mail, WEB, or voice (step S274 shown in FIG. 53).

If the answer medium is WEB, the user inputs in the information search answer form whether or not narrowing search is to be performed (step S275). If narrowing search is performed, the processes in and after step S267 shown in FIG. 52 are repeated. If not, the process terminates.

If the answer medium is e-mail, after the system 51 performs the processes similar to those in steps S244 through S248 shown in FIG. 47 (steps S276 through S280), it performs the process in step S275.

If the answer medium is voice, after the system 51 performs the processes similar to those in steps S249 through S251 shown in FIG. 47 (steps S281 through S283), the process terminates.

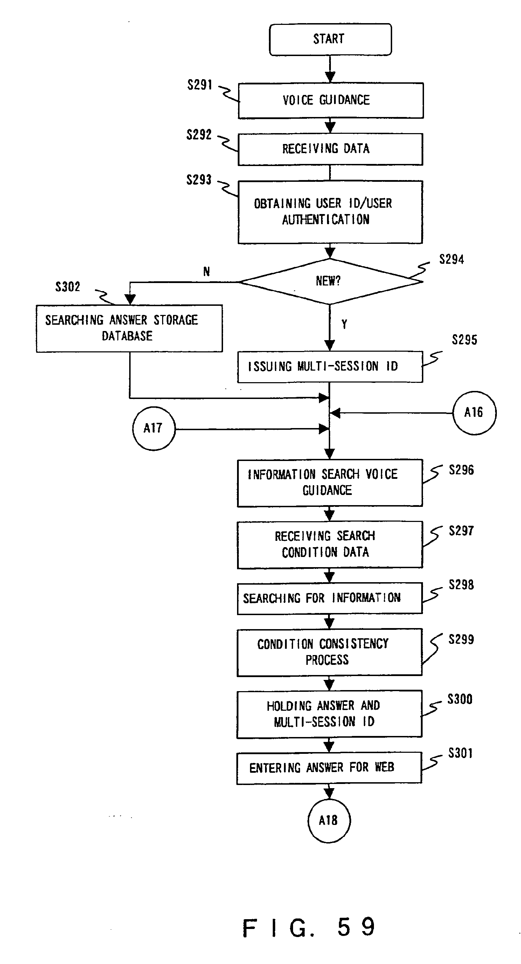

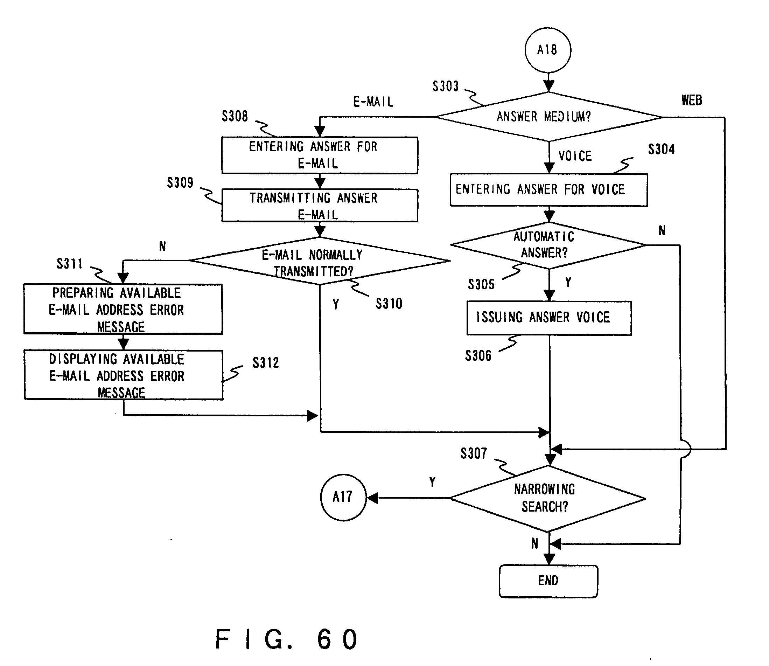

FIGS. 59 and 60 are flowcharts of the information searching process using voice in the information search system shown in FIG. 26. In this process, a request from the user to the system 51 is transmitted through voice, a PB signal, etc.

An entered user who desires information search calls up the system 51, and requests information search. In response to the request, the voice control unit 58 outputs a service start message, a message requesting authentication information such as a user ID, a password, a voiceprint, etc., and a message inquiring the type of new search/continuation (narrowing search) to the user, and outputs a voice guidance for login (step S291 shown in FIG. 59).

According to the voice guidance, the user inputs necessary information in the system 51 using voice, a PB signal, etc., and the system 51 receives input data (step S292).

Then, the user information process unit 132 performs user authentication as in step S194 shown in FIG. 40 (step S293), and the voice control unit 58 determines based on the received data whether or not the type of process is new search or continuation (step S294). If it is new search, then the session information integral management unit 55 issues a multi-session ID, and enters necessary information in the multi-session information table shown in FIG. 8 (step S295).

Then, the voice control unit 58 outputs a voice guidance to prompt the user to perform new search, and inquires a search condition and an answer medium of the user (step S296). When the user inputs a search condition and an answer medium by voice, the voice control unit 58 receives the input data, and confirms that the search condition has been normally input (step S297). The processes in steps S298 through S301 are similar to those in steps S238 through S241 shown in FIG. 46.

If the type of process is 'continuation' in step S294, the information similar to that displayed on the multi-session list screen as shown in FIG. 57 is output as voice guidance (step S302). According to the voice guidance, the user selects a specific multi-session ID, and a history number if necessary. Then, the voice control unit 58 obtains the selected multi-session ID and history number. Afterwards, the processes in and after step S296 are performed.

In this case, in step S296, the voice control unit 58 outputs the information similar to that contained in the narrowing information search form as shown in FIG. 57, and prompts the user to perform narrowing search.

If an answer is entered by voice in step S301, then the voice control unit 58 determines which is the answer medium specified by the user, e-mail, WEB, or voice (step S303 in FIG. 60).

If the answer medium is voice, the system 51 performs the processes similar to those in steps S249 and S250 shown in FIG. 47 (steps S304 and S305). If an automatic answer cannot be made in step S305, the process terminates.

If an automatic answer can be made, the voice control unit 58 notifies the user of a list of search results by the voice guidance of the answer (step S306), and prompts the user to input whether or not narrowing search is performed (step S307). When the narrowing search is performed, the processes in and after step S296 are repeated. When the narrowing search is not performed, the process terminates.

If the answer medium is e-mail, after the system 51 performs the processes similar to those in steps S244 through S248 shown in FIG. 47 (step S308 through S312), the process in step S307 is performed. In this case, the user determines whether or not the narrowing search is performed according to the received answer e-mail.

If the answer medium is WEB, the system 51 performs the process in step S307. In this case, the user determines whether or not the narrowing search is to be performed based on the answer displayed on the WEB page.

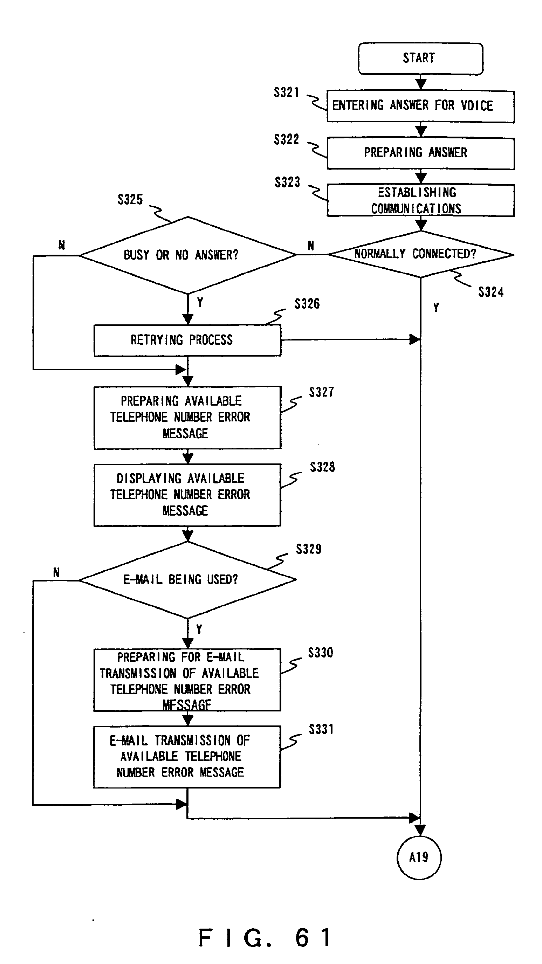

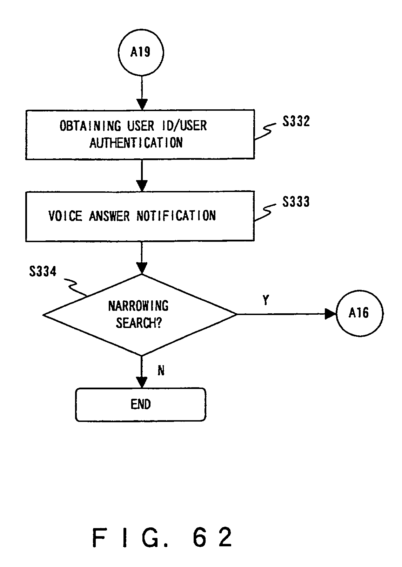

FIGS. 61 and 62 are flowcharts of the answer communications reservation setting process in step S251 shown in FIG. 47 and step S283 shown in FIG. 53. In this process, the system 51 calls up the user who desires to obtain the information search result, and notifies the user of the search result by voice.

First, the answer process unit 123 refers to the answer management table shown in FIG. 23 and the answer information table shown in FIG. 24 to obtain an answer and generate a message to which a search result list, etc. is attached (step S321). Then, the user information process unit 132 refers to the user information table shown in FIG. 17 and the available media information table shown in FIG. 18, and obtains an entered telephone number (step S322). The voice control unit 58 establishes communications for the telephone number (step S323).

The processes in steps S324 through S331 are similar to those in steps S213 through S221 shown in FIG. 42. In steps S324 and S326, when a user terminal is successfully connected, the voice control unit 58 performs user authentication as in step S223 shown in FIG. 43 (step S332 shown in FIG. 62).

Then, the voice control unit 58 notifies the user of the message generated in step S321 by a voice guidance (step S333), and determination similar to that in step S307 in FIG. 60 is made (step S334). When the user performs narrowing search, the processes in and after step S296 shown in FIG. 59 are performed. If the user does not perform narrowing search, the process terminates.

In the above mentioned embodiment, when a process of continuing an existing session is performed, the system obtains a session ID/history number by the user explicitly indicating the session ID/history number. Instead, the system can present a list of information indicating the process result (search result, etc.) up to the present time as selection items to the user so that the session ID/history number corresponding to the information selected by the user can be automatically obtained.

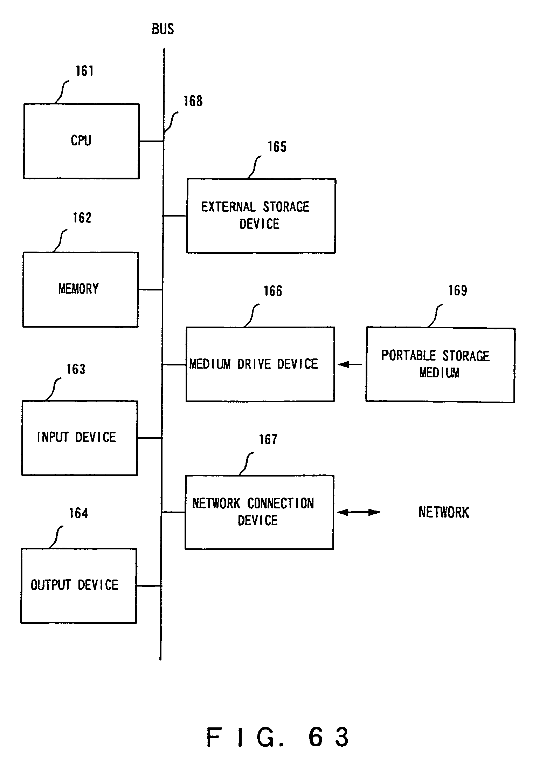

The session management systems shown in FIGS. 2B, 3, 4, 5, 6, 13, and 26, and the user terminals for receiving services from these systems can be configured using the information process device (computer) as shown in FIG. 63. The information process device shown in FIG. 63 comprises a CPU (central processing unit) 161, memory 162, an input device 163, an output device 164, an external storage device 165, a medium drive device 166, and a network connection device 167. They are interconnected through a bus 168.

The memory 162 contains, for example, ROM (read only memory), RAM (random access memory), etc., and stores a program and data used in the process. The CPU 161 performs necessary processes by executing the program using the memory 162.

For example, the media system 54 shown in FIGS. 2B and 26, the media system 74 shown in FIGS. 3, 4, 5, 6, and 13, the individual information process unit 91 shown in FIGS. 6, 13, and 26, and the search engine 101 shown in FIGS. 13 and 26 are stored in the memory 162 as a software component described in the program. Each component in the media systems 54 and 74, and the individual information process unit 91 are similarly stored.

The input device 163 can be, for example, a keyboard, a pointing device, a touch panel, etc., and can be used in inputting an instruction and information from an operator (user, administrator, etc.). The output device 164 can be, for example, a display, a printer, a speaker, etc., and is used in outputting an inquiry to the operator and a process result.

The external storage device 165 can be, for example, a magnetic disk device, an optical disk device, an magneto-optical disk, a tape device, etc. The information process device stores the above mentioned program and data in the external storage device 165, and uses them as necessary by loading them onto the memory 162.

The external storage device 165 can be used as the multi-session management database 92, the answer storage database 112, and the user information management database 114 shown in FIGS. 6, 13, and 26.

The medium drive device 166 drives a portable storage medium 169, and accesses the contents. The portable storage medium 169 can be any computer readable storage medium such as a memory card, a floppy disk, CD-ROM (compact disk read only memory), an optical disk, a magneto-optical disk, etc. The operator stores the above mentioned program and data in the portable storage medium 169, and uses them by loading them onto the memory 162 as necessary.

The network connection device 167 is used for connection to Internet 4, the public telephone network 5, and the access network 71-i, and converts data for communications. The information process device receives the above mentioned program and data from other devices through the network connection device 167, and uses them by loading them onto the memory 162 as necessary.

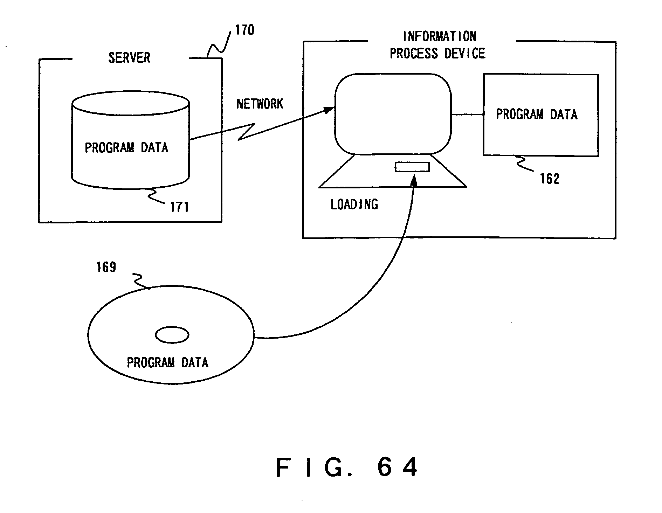

FIG. 64 shows a computer-readable storage medium capable of providing a program and data for the information process device shown in FIG. 63. The program and data stored in the portable storage medium 169 and a database 171 of an external server 170 are loaded onto the memory 162. Then, the CPU 161 executes the program using the data, and performs a necessary process. At this time, the server 170 generates a signal propagating a program, etc., and transmits it to the information process device through an arbitrary transmission medium in a network.

The present invention advantageously provides an apparatus and a method for managing a session for realizing an information search process through a network to search for information, etc. using a plurality of media in combination between a user terminal such as a portable information terminal, etc. and an information providing system.

According to the embodiments above, consistent session management is performed through plural media such as e-mail, WEB, voice, etc., and the user can perform a series of continuous information processes using any medium for each accessing process in a session. Thus, an information process can be realized through a network in which a plurality of media can be used in combination between a user terminal and an information providing system.

## Claims

1. A session management apparatus (51 and 72) for managing a session of an information search process through a network (4, 5, 44 and 71-i)the sessions management apparatus being configured for using a plurality of media and comprising:
a plurality of communications means (41, 52, 53 and 73-i) for transmitting and receiving data of the plurality of media respectively;
a plurality of interface means (42, 56, 57, 58 and 78-i) respectively corresponding to the plurality of media, for respectively receiving session information from the plurality of communications means, and for generating unified session information corresponding to the received session information; and
integral management means (43, 55 and 75) for receiving the unified session information from each of said plurality of interface means, and for performing a process relating to session management on a session of an information search process using two or more media in combination among the plurality of media according to the received unified session information.

2. The apparatus according to Claim 1, wherein said integral management means is arranged to perform a process relating to session management, including starting the session using the two or more media, identity management for the session, and disconnection of the session.

3. The apparatus according to Claim 1, wherein each of said plurality of interface means comprises session information conversion means (59, 60, 61 and 79-i) for converting the received session information into the unified session information.

4. The apparatus according to claim 1, further comprising:
process means (91) for performing an information process while inheriting said unified session information, wherein
said integral management means, in use of the apparatus, is adapted to instruct said process means to perform a process corresponding to the unified session information.

5. The apparatus according to Claim 4, wherein said integral management means, in use of the apparatus, is adapted to assign a plurality of session identifiers for a user to an identifier of the user at a request from the user to establish a plurality of sessions; is adapted to manage the plurality of sessions corresponding to the plurality of session identifiers; and is adapted to instruct said process means to perform a process corresponding to a selected session identifier, which is selectable by the user from among the plurality of session identifiers, when unified session information including the selected session identifier is received.

6. The apparatus according to Claim 4, wherein said integral management means is arranged to store plural pieces of additional identification information corresponding to results of a plurality of individual information processes belonging to the session using the two or more media, and, in use of the apparatus, is adapted to instruct said process means to perform a process based on a result of an individual information process corresponding to selected additional identification information, which is selectable by a user from among the plural pieces of additional identification information, when unified session information including the selected additional identification information is received.

7. The apparatus according to Claim 1, further comprising:
register means (114) for registering user information, wherein
among said plurality of interface means, interface means corresponding to a user-desired available medium is arranged to confirm a connection of the available medium, and said register means is for registering the available medium as the user information when the connection of the available medium is confirmed.

8. The apparatus according to claim 1, further comprising:
register means (114) for registering user information; and
authentication means (78-k) for performing user authentication, wherein:
said plurality of media includes a voice medium;
when a user requests use of the voice medium, interface means corresponding to the voice medium among said plurality of interface means is arranged to obtain voice print information of the user;
said register means is arranged to register the voice print information as the user information; and
said authentication means is arranged to perform user authentication of the user according to the entered voice print information when the user gains access.

9. The apparatus according to Claim 1, further comprising:
process means (91) for performing a process relating to information search while inheriting the unified session information, wherein
said integral management means, in use of the apparatus, is adapted to instruct said process means to perform a searching process corresponding to the unified session information.

10. The apparatus according to Claim 9, wherein:
said process means comprises control means (111) for assigning plural pieces of history identification information to results of a plurality of corresponding searching processes belonging to the session using the two or more media; and
said integral management means, in use of the apparatus, is adapted to instruct said process means to perform a re-searching process based on a result of a searching process corresponding to selected history identification information, which is selectable by a user from among the plural pieces of history identification information, when unified session information including the selected history identification information is received.

11. The apparatus according to Claim 9, wherein said process means comprises:
storage means (112) for storing a result of a latest searching process among results of a plurality of searching processes belonging to the session using the two or more media; and
control means (111) for controlling for performing a re-searching process based on the result of the latest searching process when said integral management means instructs a searching process corresponding to the unified session information.

12. The session management apparatus according to Claim 1, wherein said communications means include:
mail communications means (53) for transmitting and receiving data of an electronic mail medium;
WEB communications means (53) for transmitting and receiving data of a WEB medium; and
voice communications means (52) for transmitting and receiving data of a voice medium, wherein said plurality of interface means include:
mail control means (56) for receiving session information from said mail communications means, and generating unified session information corresponding to received session information;
WEB control means (57) for receiving session information from said WEB communications means, and generating unified session information corresponding to received session information; and
voice control means (58) for receiving session information from said voice communications means, and generating unified session information corresponding to received session information,
said integral management means being arranged for performing the process relating to session management on the session of the information search process using two or more media among the electronic mail medium, the WEB medium, and the voice medium.

13. The apparatus according to Claim 12, wherein said integral management means, in use of the apparatus, is adapted to perform a process relating to session management including a start of the session using two or more media, identity management for the session, and a disconnection of the session.

14. The apparatus according to Claim 12, further comprising:
process means (91) for performing a process relating to information search while inheriting the unified session information, wherein
said integral management means, in use of the apparatus, is adapted to instruct said process means to perform a searching process corresponding to the unified session information.

15. A computer-readable storage medium (162, 165, 169 and 171) storing a program for a computer which manages a session of an information search process through a network (4, 5, 44 and 71-i)the computer using a plurality of media, said program, in operation, directing the computer to perform a process comprising:
receiving session information of each of the plurality of media through the network;
generating unified session information corresponding to the received session information, and
performing session management on a session of an information search process using two or more media in combination among the plurality of media according to the unified session information.

16. The storage medium according to Claim 15, wherein said program instructs the computer to perform a process relating to session management containing a start of the session using two or more media, identity management for the session and a disconnection of the session.

17. A method of managing a session of an information search process through a network (4, 5, 44 and 71-i) using a plurality of media, comprising:
receiving session information of each of the plurality of media through the network;
generating unified session information corresponding to the received session information; and
performing session management on a session of an information search process using two or more media in combination among the plurality of media according to the unified session information.

18. The method according to Claim 17, wherein said session management includes a start of the session using two or more media, identity management for the session, and a disconnection of the session.

19. A propagation signal propagating a program to a computer which manages a session of an information search process through a network (4, 5, 44 and 71-i) using a plurality of media, said program arranged to direct the computer to perform a process comprising:
receiving session information of each of the plurality of media through the network;
generating unified session information corresponding to the received session information; and
performing session management on a session of an information search process using two or more media in combination among the plurality of media according to the unified session information.

## Patentansprüche

1. Ein Sitzungsverwaltungsgerät (51 und 72) zum Verwalten einer Sitzung eines Informationssuchprozesses durch ein Netzwerk (4, 5, 44 und 71-i), wobei das Sitzungsverwaltungsgerät zum Benutzen einer Vielzahl von Medien konfiguriert ist und das beinhaltet:
eine Vielzahl von Kommunikationseinrichtungen (41, 52, 53 und 73-i) zum Übertragen und bzw. Empfangen der Daten von der Vielzahl der Medien;
eine Vielzahl von Schnittstelleneinrichtungen (42, 56, 57, 58 und 78-i) jeweils entsprechend zu der Vielzahl von Medien zum jeweiligen Empfangen von Sitzungsinformation von der Vielzahl der Kommunikationseinrichtungen und zum Erzeugen einer vereinheitlichten Sitzungsinformation entsprechend der empfangenen Sitzungsinformation; und
integrierte Verwaltungseinrichtungen (43, 55 und 75) zum Empfangen der vereinheitlichten Sitzungsinformation von jeder aus der Vielzahl der Schnittstelleneinrichtungen und zum Durchführen eines Prozesses, der sich auf die Sitzungsverwaltung einer Sitzung eines Informationssuchprozesses bezieht, der zwei oder mehr Medien in Kombination aus der Vielzahl von Medien entsprechend der empfangenen, vereinheitlichten Sitzungsinformation verwendet.

2. Das Gerät gemäß Anspruch 1, wobei die integrierte Verwaltungseinrichtung angeordnet ist, einen Prozess durchzuführen, der sich auf die Sitzungsverwaltung bezieht, die das Starten der Sitzung, die zwei oder mehr Medien verwendet, Identitätsverwaltung für die Sitzung und Trennen der Sitzung einschließt.

3. Das Gerät gemäß Anspruch 1, wobei jede aus der Vielzahl von Schnittstelleneinrichtungen Sitzungsinformations-Umwandlungseinrichtungen (59, 60, 61 und 79-1) beinhaltet, um die empfangene Sitzungsinformation in die vereinheitlichte Sitzungsinformation umzuwandeln.

4. Das Gerät gemäß Anspruch 1, das weiter beinhaltet:
eine Prozesseinrichtung (91) zum Durchführen eines Informationsprozesses, während die vereinheitlichte Sitzungsinformation geerbt wird, wobei
die integrierte Verwaltungseinrichtung, die in Verwendung des Gerätes ist, angepasst ist, die Prozesseinrichtung anzuweisen, einen Prozess entsprechend der vereinheitlichten Sitzungsinformation durchzuführen.

5. Das Gerät gemäß Anspruch 4, wobei die integrierte Verwaltungseinrichtung, die in Verwendung des Gerätes ist, angepasst ist, eine Vielzahl von Sitzungsidentifikatoren für einen Benutzer auf Anforderung des Benutzers einem Identifikator für den Benutzer zuzuweisen, um eine Vielzahl von Sitzungen auszubauen; angepasst ist, die Vielzahl von Sitzungen entsprechend der Vielzahl von Sitzungsidentifikatoren zu verwalten; und angepasst ist, die Prozesseinrichtung anzuweisen, einen Prozess entsprechend einem ausgewählten Sitzungsidentifikator durchzuführen, der durch den Benutzer aus einer Vielzahl von Sitzungsidentifikatoren auswählbar ist, wenn vereinheitlichte Sitzungsinformation einschließlich der ausgewählten Sitzungsinformation empfangen wird.

6. Das Gerät gemäß Anspruch 4, wobei die integrierte Verwaltungseinrichtung eingerichtet ist, vielfältige Stücke von zusätzlicher Identifikationsinformation entsprechend den Ergebnissen einer Vielzahl von individuellen Informationsprozessen, die zu der Sitzung gehören, die die zwei oder mehr Medien verwendet, zu speichern, und die integrierte Verwaltungseinrichtung, die in Verwendung des Gerätes ist, angepasst ist, die Prozesseinrichtung anzuweisen, einen Prozess durchzuführen, der auf einem Ergebnis eines individuellen Informationsprozesses entsprechend der ausgewählten, zusätzlichen Identifikationsinformation basiert, die durch einen Benutzer aus vielfältigen Stücken von zusätzlicher Identifikationsinformation auswählbar ist, wenn vereinheitlichte Sitzungsinformation einschließlich der ausgewählten zusätzlichen Identifikationsinformation empfangen wird.

7. Das Gerät gemäß Anspruch 1, das weiter beinhaltet:
eine Registrierungseinrichtung (114) zum Registrieren von Benutzerinformation, wobei
aus der Vielzahl von Schnittstelleneinrichtungen eine Schnittstelleeinrichtung entsprechend einem benutzergewünschten, verfügbaren Medium eingerichtet ist, eine Verbindung des verfügbaren Mediums zu bestätigen, und die Registrierungseinrichtung dafür da ist, das verfügbare Medium als die Benutzerinformation zu registrieren, wenn die Verbindung des verfügbaren Mediums bestätigt wird.

8. Das Gerät gemäß Anspruch 1, das weiter beinhaltet:
eine Registrierungseinrichtung (114) zum Registrieren von Benutzerinformation; und
eine Authentifizierungseinrichtung (78-k) zum Durchführen einer Benutzerauthentifikation, wobei:
die Vielzahl von Medien ein Sprachmedium einschließt;
wenn ein Benutzer die Verwendung des Sprachmediums anfordert, eine Schnittstelleneinrichtung entsprechend dem Sprachmedium aus der Vielzahl von Schnittstelleneinrichtungen eingerichtet ist, Sprachabdruckinformation des Benutzers zu erhalten;
die Registrierungseinrichtung eingerichtet ist, die Sprachabdruckinformation als die Benutzerinformation zu registrieren; und
die Authentifizierungseinrichtung eingerichtet ist, eine Benutzerauthentifikation des Benutzers entsprechend der eingegebenen Sprachabdruckinformation durchzuführen, wenn der Benutzer Zugriff erhält.

9. Das Gerät gemäß Anspruch 1, das weiter beinhaltet:
eine Prozesseinrichtung (91) zum Durchführen eines Prozesses, der sich auf eine Informationssuche bezieht, während die vereinheitlichte Sitzungsinformation geerbt wird, wobei
die integrierte Verwaltungseinrichtung, die in Verwendung des Gerätes ist, angepasst ist, die Prozesseinrichtung anzuweisen, einen Suchprozess gemäß der vereinheitlichten Sitzungsinformation durchzuführen.

10. Das Gerät gemäß Anspruch 9, wobei:
die Prozesseinrichtung eine Steuereinrichtung (111) beinhaltet, um vielfältige Stücke von Verlaufsidentifikationsinformation zu Ergebnissen einer Vielzahl von entsprechenden Suchprozessen zuzuordnen, die zu der Sitzung gehören, die die zwei oder mehr Medien verwendet; und
die integrierte Verwaltungseinrichtung, die in Verwendung des Gerätes angepasst ist, die Prozesseinrichtung anweist, einen erneuten Suchprozess durchzuführen, der auf einem Ergebnis eines Suchprozesses basiert entsprechend der ausgewählten Verlaufsidentifikationsinformation, die durch einen Benutzer aus vielfältigen Stücken von Verlaufsidentifikationsinformation auswählbar ist, wenn vereinheitlichte Sitzungsinformation einschließlich der ausgewählten Verlaufsidentifikationsinformation empfangen wird.

11. Das Gerät gemäß Anspruch 9, wobei die Prozesseinrichtung beinhaltet:
eine Speichereinrichtung (112) zum Speichern eines Ergebnisses eines neusten Suchprozesses aus den Ergebnissen aus einer Vielzahl von Suchprozessen, die zu der Sitzung gehören, die die zwei oder mehr Medien verwendet; und
eine Steuereinrichtung (111) zum Steuern des Durchführens eines erneuten Suchprozesses, der auf dem Ergebnis des neusten Suchprozesses basiert, wenn die integrierte Verwaltungseinrichtung einen Suchprozess entsprechend der vereinheitlichten Sitzungsinformation anweist.

12. Das Sitzungsverwaltungsgerät gemäß Anspruch 1, wobei die Kommunikationseinrichtungen beinhalten:
eine Mailkommunikationseinrichtung (53) zum Übertragen und Empfangen von Daten eines elektronischen Mailmediums;
eine WEB-Kommunikationseinrichtung (53) zum Übertragen und Empfangen von Daten eines WEB-Mediums; und
eine Sprachkommunikationseinrichtung (52) zum Übertragen und Empfangen von Daten eines Sprachmediums, wobei die Vielzahl von Schnittstelleneinrichtungen beinhaltet:
eine Mailsteuereinrichtung (56) zum Empfangen von Sitzungsinformation von der Mailkommunikationseinrichtung, und Erzeugen einer vereinheitlichten Sitzungsinformation entsprechend der empfangen Sitzungsinformation;
eine WEB-Steuereinrichtung (57) zum Empfangen von Sitzungsinformation von der WEB-Kommunikationseinrichtung und Erzeugen einer vereinheitlichten Sitzungsinformation entsprechend der empfangenen Sitzungsinformation; und
eine Sprachsteuereinrichtung (58) zum Empfangen von Sitzungsinformation von der Sprachkommunikationseinrichtung und Erzeugen einer vereinheitlichten Sitzungsinformation entsprechend der empfangenen Sitzungsinformation,
wobei die integrierte Verwaltungseinrichtung eingerichtet ist, den Prozess durchzuführen, der sich auf die Sitzungsverwaltung der Sitzung des Informationssuchprozesse bezieht, die zwei oder mehr Medien aus dem elektronischen Mailmedium, dem WEB Medium und dem Sprachmedium verwendet.

13. Das Gerät gemäß Anspruch 12, wobei die integrierte Verwaltungseinrichtung, die in Verwendung des Gerätes ist, einen Prozess durchführt, der sich auf die Sitzungsverwaltung bezieht, die einen Start der Sitzung, die die zwei oder mehr Medien verwendet, Identitätsmanagement für die Sitzung und ein Trennen der Sitzung einschließt.

14. Das Gerät gemäß Anspruch 12, das weiter beinhaltet:
Eine Prozesseinrichtung (91) zum Durchführen eines Prozesses, der sich auf eine Informationssuche bezieht, während die vereinheitlichte Sitzungsinformation geerbt wird, wobei
Die integrierte Verwaltungseinrichtung , die in Verwendung des Gerätes ist, angepasst ist, die Prozesseinrichtung anzuweisen einen Suchprozess entsprechend der vereinheitlichten Sitzungsinformation durchzuführen.

15. Ein computerlesbares Speichermedium (162, 165, 169 und 171), das ein Programm für einen Computer speichert, das die Sitzung eines Informationssuchprozesses durch ein Netzwerk (4, 5, 44 und 71-i) verwaltet, wobei der Computer eine Vielzahl von Medien verwendet und das Programm, das in Betrieb ist, den Computer anweist einen Prozess durchzuführen, der beinhaltet:
Empfangen von Sitzungsinformation von jedem aus der Vielzahl von Medien durch das Netzwerk;
Erzeugen von vereinheitlichter Sitzungsinformation entsprechend der empfangenen Sitzungsinformation; und
Durchführen von Sitzungsverwaltung einer Sitzung eines Informationssuchprozesses, der zwei oder mehr Medien in Kombination aus der Vielzahl von Medien gemäß der vereinheitlichten Sitzungsinformation verwendet

16. Das Speichermedium gemäß Anspruch 15, wobei das Programm den Computer anweist, einen Prozess durchzuführen, der sich auf die Sitzungsverwaltung bezieht, die einen Start der Sitzung, die zwei oder mehr Medien verwendet, Identitätsmanagement für die Sitzung und eine Trennung der Sitzung enthält.

17. Ein Verfahren zum Verwalten einer Sitzung eines Informationssuchprozesses durch ein Netzwerk (4, 5, 44 und 71-i), das eine Vielzahl von Medien verwendet, das beinhaltet:
Empfangen von Sitzungsinformation von jedem aus der Vielzahl von Medien durch das Netzwerk;
Erzeugen vereinheitlichter Sitzungsinformation entsprechend der empfangenen Sitzungsinformation; und
Durchführen von Sitzungsverwaltung einer Sitzung eines Informationssuchprozesses, der zwei oder mehr Medien in Kombination aus der Vielzahl von Medien gemäß der vereinheitlichten Sitzungsinformation verwendet.

18. Das Verfahren gemäß Anspruch 17, wobei die Sitzungsverwaltung einen Start der Sitzung, die zwei oder mehr Medien verwendet, Identitätsverwaltung für die Sitzung und eine Trennung der Sitzung einschließt.

19. Ein Verbreitungssignal, das ein Programm an einem Computer verbreitet, der eine Sitzung eines Informationssuchprozesses durch ein Netzwerk (4, 5, 44 und 71-i) verwaltet, das eine Vielzahl von Medien verwendet, und das Programm eingerichtet ist, den Computer anzuweisen einen Prozess durchzuführen, der beinhaltet:
Empfangen von Sitzungsinformation von jedem aus der Vielzahl von Medien des Netzwerks;
Erzeugen vereinheitlichter Sitzungsinformation entsprechend der empfangenen Sitzungsinformation; und
Durchführen von Sitzungsverwaltung einer Sitzung eines Informationssuchprozesses, der zwei oder mehr Medien in Kombination aus der Vielzahl der Medien gemäß der vereinheitlichten Sitzungsinformation verwendet.

## Revendications

1. Appareil de gestion de session (51 et 72) destiné à gérer une session d'un traitement de recherche d'informations par l'intermédiaire d'un réseau (4, 5, 44 et 71-i), l'appareil de gestion de session étant configuré pour utiliser une pluralité de supports et comprenant :
une pluralité de moyens de communication (41, 52, 53 et 73-i) destinés à transmettre et recevoir respectivement des données de la pluralité de supports ;
une pluralité de moyens d'interface (42, 56, 57, 58 et 78-i) correspondant respectivement à la pluralité de supports, destinés à recevoir respectivement des informations de session provenant de la pluralité de moyens de communication, et destinés à générer des informations de session unifiées correspondant aux informations de session reçues ; et
des moyen de gestion intégrale (43, 55 et 75) destinés à recevoir les informations de session unifiées provenant de chacun parmi ladite pluralité de moyens d'interface, et destinés à accomplir un traitement concernant une gestion de session sur une session d'un traitement de recherche d'informations utilisant deux ou plusieurs supports en combinaison parmi la pluralité de supports selon les informations de session unifiées reçues.

2. Appareil selon la revendication 1, dans lequel ledit moyen de gestion intégrale est agencé pour accomplir un traitement concernant une gestion de session incluant le démarrage de la session au moyen de deux ou plusieurs supports, la gestion des identités pour les sessions, et la déconnexion de la session.

3. Appareil selon la revendication 1, dans lequel chacun parmi ladite pluralité de moyens d'interface comprend un moyen de conversion d'informations de session (59, 60, 61 et 79-i) destiné à convertir les informations de session reçues en informations de session unifiées.

4. Appareil selon la revendication 1, comprenant en outre :
un moyen de traitement (91) destiné à accomplir un traitement d'informations tout en récupérant lesdites informations de session unifiées, dans lequel
ledit moyen de gestion intégrale, pendant l'utilisation de l'appareil est adapté pour ordonner audit moyen de traitement d'accomplir un traitement correspondant aux informations de session unifiées.

5. Appareil selon la revendication 4, dans lequel ledit moyen de gestion intégrale, pendant l'utilisation de l'appareil, est adapté pour attribuer une pluralité d'identifiants de session à un utilisateur à la suite d'une requête de l'utilisateur pour établir une pluralité de sessions ; est adapté pour gérer la pluralité de sessions correspondant à la pluralité d'identifiants de session ; et adapté pour ordonner audit moyen de traitement d'accomplir un traitement correspondant à un identifiant de session sélectionné, qui peut être sélectionné par l'utilisateur parmi la pluralité d'identifiants de session, lorsque des informations de session unifiées incluant l'identifiant de session sélectionné sont reçues.

6. Appareil selon la revendication 4, dans lequel ledit moyen de gestion intégrale est agencé pour stocker plusieurs informations d'identification supplémentaires correspondant aux résultats d'une pluralité de traitements d'informations individuels appartenant à la session utilisant les deux ou plusieurs supports, et pendant l'utilisation de l'appareil, est adapté pour ordonner audit moyen de traitement d'accomplir un traitement sur la base d'un résultat d'un traitement d'informations individuel correspondant à des informations d'identification supplémentaires sélectionnées, qui peuvent être sélectionnées par un utilisateur parmi les plusieurs informations d'identification supplémentaires, lorsque des informations de session unifiées incluant les informations d'identification supplémentaires sélectionnées sont reçues.

7. Appareil selon la revendication 1, comprenant en outre :
un moyen d'enregistrement (114) destiné à enregistrer des informations utilisateur, dans lequel
parmi ladite pluralité de moyens d'interface, des moyens d'interface correspondant à un support disponible souhaité par l'utilisateur sont agencés pour confirmer une connexion du support disponible, et ledit moyen d'enregistrement est destiné à enregistrer le support disponible comme informations utilisateur lorsque la connexion du support disponible est confirmée.

8. Appareil selon la revendication 1, comprenant en outre :
un moyen d'enregistrement (114) destiné à enregistrer des informations utilisateur ; et
un moyen d'identification (78-k) destiné à accomplir une authentification de l'utilisateur, dans lequel :
ladite pluralité de supports comporte un support vocal ;
lorsqu'un utilisateur demande l'utilisation du support vocal, un moyen d'interface correspondant au support vocal parmi lesdites pluralités de moyens d'interface est agencé pour obtenir des informations d'empreinte vocale de l'utilisateur ;
ledit moyen d'enregistrement est agencé pour enregistrer des informations d'empreinte vocale comme informations utilisateur ; et
ledit moyen d'authentification est agencé pour accomplir une authentification de l'utilisateur en fonction des informations d'empreinte vocale entrées lors de l'accès de l'utilisateur.

9. Appareil selon la revendication 1, comprenant en outre :
un moyen de traitement (91) destiné à accomplir un traitement concernant une recherche d'informations tout en récupérant les informations de session unifiées, dans lequel
ledit moyen de gestion intégrale, pendant l'utilisation de l'appareil, est adapté pour ordonner audit moyen de traitement d'accomplir un traitement de recherche correspondant aux informations de session unifiées.

10. Appareil selon la revendication 9, dans lequel :
ledit moyen de traitement comprend un moyen de commande (111) destiné à attribuer plusieurs informations d'identification formant historique à des résultats d'une pluralité de traitements de recherche correspondants appartenant à la session utilisant les deux ou plusieurs supports ; et
ledit moyen de gestion intégrale, pendant l'utilisation de l'appareil est adapté pour ordonner audit moyen de traitement d'accomplir un traitement de renouvellement de recherche sur la base d'un résultat d'un traitement de recherche correspondant à des informations d'identification formant historique sélectionnées, qui peuvent être sélectionnées par un utilisateur parmi les plusieurs informations d'identification formant historique, lorsque des informations de session unifiées incluant les informations d'identification formant historique sélectionnées sont reçues.

11. Appareil selon la revendication 9, dans lequel ledit moyen de traitement éomprend :
un moyen de stockage (112) destiné à stocker un résultat d'un dernier traitement de recherche parmi des résultats d'une pluralité de traitements de recherche appartenant à la session utilisant les deux ou plusieurs supports ; et
un moyen de commande (111) destiné à commander la mise en oeuvre d'un traitement de renouvellement de recherche sur la base du résultat du dernier traitement de recherche lorsque ledit moyen de gestion intégrale ordonne un traitement de recherche correspondant aux informations de session unifiées.

12. Appareil de gestion de session selon la revendication 1, dans lequel lesdits moyens de communication comportent :
un moyen de communication par courriel (53) destiné à transmettre et recevoir les données d'un support de courrier électronique ;
un moyen de communication par Internet (53) destiné à transmettre et recevoir les données d'un support Internet ; et
un, moyen de communication vocale (52) destiné à transmettre et recevoir des données d'un support vocal, où ladite pluralité de moyens d'interface comportent :
un moyen de commande par courriel (56) destiné à recevoir des informations de session provenant dudit moyen de communication par courriel, et générer des informations de session unifiées correspondant aux informations de session reçues ;
un moyen de commande par Internet (57) destiné à recevoir des informations de session provenant dudit moyen de communication par Internet, et générer des informations de session unifiées correspondant aux informations de session reçues ; et
un moyen de commande vocale (58) destiné à recevoir des informations de session provenant dudit moyen de communication vocale, et générer des informations de session unifiées correspondant aux informations de session reçues,
ledit moyen de gestion intégrale étant agencé pour accomplir le traitement concernant une gestion de session sur la session du traitement de recherche d'informations utilisant deux ou plusieurs supports parmi le support courrier électronique, le support Internet et le support vocal.

13. Appareil selon la revendication 12, dans lequel ledit moyen de gestion intégrale, pendant l'utilisation de l'appareil est adapté pour accomplir un traitement concernant une gestion de session comportant un démarrage de la session utilisant deux ou plusieurs supports, une gestion des identités pour la session, et une déconnexion de la session.

14. Appareil selon la revendication 12, comprenant en outre :
un moyen de traitement (91) destiné à accomplir un traitement concernant une recherche d'informations tout en récupérant les informations de session unifiées, dans lequel
ledit moyen de gestion intégrale, pendant l'utilisation de l'appareil, est adapté pour ordonner audit moyen de traitement d'accomplir un traitement de recherche correspondant aux informations de session unifiées.

15. Support de stockage lisible par ordinateur (162, 165, 169 et 171) stockant un programme pour un ordinateur qui gère une session d'un traitement de recherche d'informations par l'intermédiaire d'un réseau (4, 5, 44 et 71-i), l'ordinateur utilisant une pluralité de supports, ledit programme, en cours de fonctionnement, dirigeant l'ordinateur pour accomplir un traitement comprenant les étapes consistant à :
recevoir des informations de session de chacun parmi la pluralité de supports par l'intermédiaire du réseau ;
générer des informations de session unifiées correspondant aux informations de session reçues ; et
accomplir une gestion de session sur une session d'un traitement de recherche d'informations utilisant deux ou plusieurs supports en combinaison parmi la pluralité de supports selon les informations de session unifiées.

16. Support de stockage selon la revendication 15, dans lequel ledit programme ordonne à l'ordinateur d'accomplir un traitement concernant une gestion de session contenant un démarrage de la session utilisant deux ou plusieurs supports, une gestion des identités pour la session et une déconnexion de la session.

17. Procédé destiné à gérer une session d'un traitement de recherche d'informations par l'intermédiaire d'un réseau (4, 5, 44 et 71-i) utilisant une pluralité de supports, comprenant les étapes consistant à :
recevoir des informations de session de chacun parmi la pluralité de supports par l'intermédiaire du réseau ;
générer des informations de session unifiées correspondant aux informations de session reçues ; et
accomplir une gestion de session sur une session d'un traitement de recherche d'informations utilisant deux ou plusieurs supports en combinaison parmi la pluralité de supports selon les informations de session unifiées.

18. Procédé selon la revendication 17, dans lequel ladite gestion de session comprend un démarrage de la session utilisant deux ou plusieurs supports, une gestion des identités pour la session, et une déconnexion de la session.

19. Signal de propagation propageant un programme vers un ordinateur qui gère une session d'un traitement de recherche d'informations par l'intermédiaire d'un réseau (4, 5, 44 et 71-i) utilisant une pluralité de supports, ledit programme étant agencé pour diriger l'ordinateur de sorte qu'il accomplisse un traitement comprenant les étapes consistant à :
recevoir des informations de session de chacun parmi la pluralité de supports par l'intermédiaire du réseau ;
générer des informations de session unifiées correspondant aux informations de session reçues ; et
accomplir une gestion de session sur une session d'un traitement de recherche d'informations utilisant deux ou plusieurs supports en combinaison parmi la pluralité de supports selon les informations de session unifiées.
